# EUROPÄISCHE PATENTSCHRIFT

(11) **EP 3 137 396 B1**
(45) Veröffentlichungstag und Bekanntmachung des Hinweises auf die Patenterteilung: **11.12.2019**
(21) Anmeldenummer: 15723823.9
(22) Anmeldetag: 01.05.2015
(51) Int. Cl.: B65D 90/62, B65G 69/18

(54) **VERSCHLUSSANORDNUNG, VERFAHREN ZUM VERSCHLIESSEN EINES VERSCHLUSSES UND SCHÜTTGUTBEHÄLTER DAMIT**
CLOSING ASSEMBLY, METHOD FOR CLOSING A CLOSURE AND BULK MATERIAL CONTAINER THEREWITH
SYSTÈME DE FERMETURE, PROCÉDÉ PERMETTANT DE FERMER UNE FERMETURE ET CONTENEUR DE PRODUITS EN VRAC AVEC UN TEL SYSTÈME

(30) Priorität: 02.05.2014 EP 14405040
(43) Veröffentlichungstag der Anmeldung: 08.03.2017
(73) Patentinhaber: Visval AG, 3186 Düdingen (CH)
(72) Erfinder: CUENNET, Jean-Marie, CH-3186 Düdingen (CH); GIANETTONI, Filip, CH-6596 Gordola (CH); BORDOLI, Gabriele, CH-6500 Bellinzona (CH)
(74) Vertreter: Keller & Partner Patentanwälte AG
(86) Internationale Anmeldenummer: PCT/CH2015/000070
(87) Internationale Veröffentlichungsnummer: WO 2015/164988

(56) Entgegenhaltungen:
- EP-A1- 1 702 866
- WO-A1-96/10709
- WO-A1-99/64767
- DE-A1- 10 236 520

## Beschreibung

### Technisches Gebiet

Die Erfindung betrifft eine Verschlussanordnung mit einem Verschluss für einen Schüttgutbehälter, welcher einen ringförmigen Anschlussflansch mit einer Durchlassöffnung und ein Verschlussorgan zum wahlweisen Verschliessen oder Öffnen der Durchlassöffnung umfasst, wobei eine Behälterwandung des Schüttgutbehälters an dem Anschlussflansch befestigbar ist. Weiter betrifft die Erfindung ein Verfahren zum Verschliessen eines solchen Verschlusses einer Verschlussanordnung sowie einen Schüttgutbehälter mit einer solchen Verschlussanordnung.

### Stand der Technik

Schüttgüter wie z. B. pulver- oder granulatförmige Stoffe oder auch Fluide wie gasförmige oder flüssige Stoffe werden für den Transport oder zur Lagerung oft in speziellen Schüttgutbehältern aufbewahrt. Solche Schüttgutbehälter können beispielsweise als Säcke oder Fässer ausgebildet sein und aus den verschiedensten Materialen wie Textilien, Kunststoffen oder auch Metallen bestehen. Sie können auch aus einer Mischung aus unterschiedlichen Materialen bestehen und ein- oder mehrlagig ausgebildet sein.

Zum Entleeren von Schüttgut aus solchen Schüttgutbehältern umfassen diese typischerweise einen Verschluss, der an eine entsprechende Anschlusspartie einer hierfür ausgebildeten Entleerungsvorrichtung angeschlossen werden kann. Der Verschluss umfasst typischerweise ein Verschlussorgan, mit welchem eine Öffnung in der Behälterwandung wahlweise verschlossen oder geöffnet werden kann.

Die EP 1 574 455 A1 der Visval AG zeigt eine solche Entleerungsvorrichtung (10). Diese umfasst eine Anschlusspartie (24), an welche ein entsprechender Anschlussflansch (51, 52) eines Schüttgutbehälters (50) angeschlossen werden kann. Die Öffnung des Anschlussflansches ist durch ein Verschlussorgan (60) verschliessbar. Weiter umfasst die Entleerungsvorrichtung (10) ein Verschlussbetätigungselement (34), welches verschiebbar gelagert ist und mit welchem das Verschlussorgan (60) des an die Entleerungsvorrichtung (10) angeschlossenen Schüttgutbehälters (50) derart verschiebbar ist, dass die Öffnung im Anschlussflansch (51, 52) damit wahlweise geöffnet bzw. verschlossen werden kann. Bei offener Öffnung kann dann Schüttgut durch diese Öffnung hindurch aus dem Schüttgutbehälter entnommen werden. Ist die Schüttgutbehälter wie üblich oberhalb der Entleerungsvorrichtung angeordnet, fliesst bzw. strömt das Schüttgut bei geöffnetem Verschluss praktisch von alleine aus dem Behälter heraus, wobei der Entleerungsvorgang durch Einblasen von Druckluft in den Schüttgutbehälter unterstützt werden kann. Um zu verhindern, dass Schüttgut beim Entleeren zwischen die Anschlusspartie (24) und den Anschlussflansch (51, 53) gerät, sind mehrere Dichtringe (41, 42, 43) vorgesehen. Der innerste Dichtungsring (43) ist hierbei dem Aussenumfang der Eintrittsöffnung (26) entlang angeordnet und dichtet die Eintrittsöffnung bzw. den Durchlasskanal (22) in der Oberseite der Anschlusspartie (24) ab.

Eine andere Entleerungsvorrichtung zeigt die WO 96/10709 A1 (Matcon). Das offenbarte Verschlusselement weist einen konischen und einen zylindrischen Abschnitt auf. Am äusseren Umfang des zylindrischen Abschnitts ist eine C-förmige Dichtung angebracht. Beim vollständigen Verschliessen eines Behälters mit dem Verschlusselement dichtet eine Dichtlippe der C-förmigen Dichtung zusätzlich ab. Indem die Dichtlippe einen knolligen Dichtungsteil aufweist, der auch bei radialem Druck die Dichtung in der richtigen Position hält, wird verhindert, dass Fremdkörper zwischen Verschlusselement und Dichtung eindringen.

Die WO 98/43902 A1 (Matcon) offenbart eine weitere Entleerungsvorrichtung, um fliessbares Medium aus einem Container zu entladen. Die Entleerungsvorrichtung umfasst ein Rohr, einen Verschluss und eine Reinigungseinrichtung. Durch Anheben oder Senken öffnet bzw. verschliesst der Verschluss den Durchgang zum Rohr. An der Oberkante des Rohrs befindet sich eine ringförmige Dichtung. Diese Dichtung hat einen radial nach innen abstehenden Teil, der in das Rohr ragt und das Rohr zum Verschluss abdichtet, wenn kein Container auf der Entleerungsvorrichtung aufgesetzt ist. Am oberen Ende des Rohrs befindet sich die ringförmige Reinigungseinheit, auf der eine ebenfalls ringförmige flexible Dichtlippe angebracht ist. Diese Dichtlippe hat wiederum einen radial nach innen abstehenden Teil, der die Oberfläche des Verschlusses berührt und parallel zur unteren Dichtung steht. Wird ein Container auf die Entladestation gesetzt, werden die Dichtlippe und die Dichtung ausgeweitet und nach unten gekrümmt. Durch eine Dehnspannung wird eine Dichtwirkung erreicht, so dass der Innenraum des Containers gegen aussen abgedichtet ist.

Die EP 1 702 866 A1 der Visval AG zeigt eine Verschlussanordung nach dem Oberbegriff des Anspruchs 1. Einer der Nachteile dieser Entleerungsvorrichtungen ist, dass nicht vollständig verhindert wird, dass Schüttgut, insbesondere feines Schüttgut, beim Verschliessen des Verschlusses zwischen dem Verschlussorgan und dem Anschlussflansch des Verschlusses haften bleibt und so die Dichtigkeit des Verschlusses negativ beeinflussen kann.

Weiter ist auch die Dichtigkeit der Andockvorrichtung nicht vollständig gewährleistet. Es kann nämlich auch nicht verhindert werden, dass das Schüttgut beim oder nach dem Verschliessen der Eintrittsöffnung mit dem Verschlussbetätigungselement aus dem Spalt zwischen der Anschlusspartie und dem Verschlussbetätigungselement austreten kann. Die in WO 98/43902 beschriebene Dichtung zur Abdichtung der Andockvorrichtung, wenn kein Container angeschlossen ist, löst dieses Problem nur teilweise. Die offenbarte Dichtung mit Dichtlippe hat den Nachteil, dass diese durch die ständige Aufweitung des Innendurchmessers der Dichtung mit der Zeit grösser wird. Dadurch nimmt die Dichtigkeit bei aufgesetztem Container laufend ab und insbesondere, wenn kein Container aufgesetzt ist, ist eine Abdichtung des Gesamtsystems nicht mehr möglich, da der Innendurchmesser der Dichtung das bewegliche Verschlusselement nicht mehr oder nur noch ganz schwach berührt.

### Darstellung der Erfindung

Aufgabe der Erfindung ist es, einen dem eingangs genannten technischen Gebiet zugehörenden Verschluss für einen Schüttgutbehälter zu schaffen, welcher eine bessere Dichtigkeit aufweist.

Die Lösung der Aufgabe ist durch die Merkmale des Anspruchs 1 definiert. Bei der Erfindung handelt es sich um eine Verschlussanordnung, welche einen Verschluss für einen Schüttgutbehälter umfasst. Bei dem Schüttgut handelt es sich beispielsweise um pulver- oder granulatförmige Stoffe. Selbstverständlich können damit aber auch Flüssigkeiten oder generell Fluide, d. h. auch gasförmige Stoffe verarbeitet werden. Der Verschluss umfasst einen ringförmigen Anschlussflansch mit einer Durchlassöffnung sowie ein erstes bewegliches Element, ein Verschlussorgan, zum wahlweisen Verschliessen oder Öffnen der Durchlassöffnung. Das Verschlussorgan ist in seiner Schliessstellung entsprechend im Innenbereich des ringförmigen Anschlussflansches angeordnet. Die Andockvorrichtung umfasst ein Gehäuse und ein zweites bewegliches Element, eine Verschlussbetätigungsvorrichtung. Die Verschlussbetätigungsvorrichtung bewegt das Verschlussorgan relativ zum Anschlussflansch und senkrecht zur Ebene der Durchlassöffnung zum Verschliessen oder

Öffnen der Durchlassöffnung. Die Verschlussbetätigungsvorrichtung umfasst eine Verstellvorrichtung und ein Verschlussbetätigungselement. Das Verschlussbetätigungselement bewegt dabei das Verschlussorgan zwischen der Öffnungsstellung und der Schliessstellung.

Der Verschluss ist dabei derart ausgebildet, dass die Behälterwandung eines Schüttgutbehälters an dem Anschlussflansch befestigbar ist. Die Behälterwandung kann je nach Beschaffenheit beispielsweise mit dem Anschlussflansch verschweisst, daran festgeklebt oder sonst wie daran befestigt werden.

Gemäss der Erfindung umfasst nun das Verschlussorgan ein umlaufendes, erstes Abstreifelement derart, dass bei einem Schliessvorgang zum Verschliessen der Durchlassöffnung des Anschlussflansches mit dem Verschlussorgan Verunreinigungen von einer Oberfläche des Anschlussflansches abstreifbar sind. Dieses Abstreifelement ist als umlaufende Kante ausgebildet.

Indem dieses erste Abstreifelement an einem der beweglichen Elemente beim Verschliessen des Anschlussflansches mit dem Verschlussbetätigungselement der nach innen gerichteten Oberfläche des Anschlussflansches entlangstreift, werden Schüttgut oder andere Verunreinigungen, die unerwünschterweise dort anhaften, aus diesem dichtenden Bereich zwischen dem Verschlussorgan und dem Anschlussflansch entfernt. Dadurch dass der kontaminierte Bereich mit den Dichtflächen gereinigt wird, bevor die Dichtungen auf den Dichtflächen aufliegen, wird die Dichtigkeit des Verschlusses bereits erheblich verbessert.

Nachfolgend wird die Andockvorrichtung z. T. auch als Entleerungsvorrichtung bezeichnet. Dieser Begriff soll aber nicht so verstanden werden, dass er ausschliesslich Vorrichtungen zum Entleeren eines Schüttgutbehälters umfasst, sondern - sofern sich aus dem Zusammenhang nichts anderes ergibt oder nichts anderes erwähnt ist, auch Vorrichtungen, die sowohl zum Entleeren als auch zum Befüllen von Schüttgutbehältern geeignet sind.

Da die Einfüll- bzw. Entleerungsöffnungen der Verschlüsse solcher Schüttgutbehälter wie auch entsprechender Andockvorrichtungen in der Regel ringförmig, üblicherweise sogar rotationssymmetrisch, d. h. kreisringförmig ausgebildet sind, sind entsprechend auch der Anschlussflansch sowie das Verschlussorgan vorzugsweise rotationssymmetrisch ausgebildet. Dies erleichtert nicht nur die Handhabung dieser Vorrichtungen beim Entleeren bzw. Befüllen, sondern auch deren Herstellung und sie sind darüber hinaus auch einfacher so zu gestalten, dass sie kompatibel zu bestehenden Anlagen sind.

Bei einer bevorzugten Ausführungsform der Erfindung umfasst der Anschlussflansch mehrere, insbesondere ringförmige Flanschelemente, wobei die Behälterwandung in diesem Fall zwischen zwei oder mehr Flanschelementen eingeklemmt werden kann. Dabei kann die Behälterwandung schon eine Öffnung umfassen, in welcher der Verschluss befestigt wird. Dies ist aber nicht zwingend der Fall. Der Verschluss bzw. der Montageprozess des Verschlusses in bzw. an der Behälterwandung kann nämlich auch so ausgebildet sein, dass die Behälterwandung im gesamten Bereich des Verschlusses intakt bleibt und die Öffnung zum Entleeren des Schüttguts erst kurz vor oder während des Entleerungsvorgangs erzeugt wird.

Ist nun der Verschluss beispielsweise an die Anschlusspartie der Entleerungsvorrichtung angeschlossen, wird das Verschlussorgan durch eine Bewegung des Verschlussbetätigungselements der Entleerungsvorrichtung bewegt, wobei der Anschlussflansch fix mit der Anschlusspartie verbunden bleibt, sodass die Durchlassöffnung wahlweise verschlossen oder geöffnet wird.

Damit der Anschlussflansch eines Schüttgutbehälters möglichst dicht an die Anschlusspartie einer Entleerungsvorrichtung angekoppelt werden kann, umfasst die Entleerungsvorrichtung mit Vorteil eine Verriegelungsvorrichtung zum kraftschlüssigen Verbinden des Anschlussflansches des Schüttgutbehälters mit der Anschlusspartie der Entleerungsvorrichtung. Diese kann beispielsweise so ausgebildet sein, dass sie manuell betätigbar ist. Sie ist aber vorzugsweise für eine automatische Betätigung ausgebildet und umfasst beispielsweise eine Art Schelle, Bride oder andere Klemm- bzw. Pressvorrichtung, die um den Anschlussflansch und die Anschlusspartie herum gelegt und so betätigt werden kann, dass Anschlussflansch und Anschlusspartie auf-, respektive aneinander gedrückt werden. Eine solche Verriegelungsvorrichtung ist beispielsweise aus der EP 1 574 455 A1 bekannt.

Mit diesem ersten Abstreifelement wird effizient verhindert, dass allfällige Verunreinigungen an der Innenseite des Anschlussflansches haften bleiben. Allerdings werden damit allfällige Verunreinigungen auf der Aussenseite des Verschlussorgans nicht entfernt. Um auch solche Verunreinigungen zu entfernen, ist am Anschlussflansch im Bereich der Durchlassöffnung mit Vorteil ein umlaufendes, zweites Abstreifelement angeordnet. Dieses ist derart angeordnet, dass es beim Schliessvorgang zum Verschliessen der Durchlassöffnung mit dem Verschlussorgan Verunreinigungen von einer Oberfläche des Verschlussorgans abstreift. Bei dieser Oberfläche handelt es sich entsprechend um die Innere, d. h. die in das Innere der Durchlassöffnung weisende Oberfläche des Anschlussflansches. Auch das zweite Abstreifelement ist beispielsweise als umlaufende Kante ausgebildet.

Bei einer bevorzugten Ausführungsform der Erfindung sind das erste Abstreifelement oder das zweite Abstreifelement oder insbesondere beide gleichzeitig auch als Halte- oder Klemmvorrichtung ausgebildet, um das Verschlussorgan in seiner Schliessstellung am Anschlussflansch zu halten. Sie können beispielsweise als Rastnase ausgebildet sein oder als eine Art Federelement, das mit einer entsprechenden Nut am Anschlussflansch bzw. am Verschlussorgan zusammenwirkt.

Die Form des Verschlussorgans ist im Prinzip frei wählbar, wobei es wie der Anschlussflansch mit Vorteil rotationssymmetrisch ausgebildet ist. Dies erleichtert nicht nur die Herstellung, sondern auch die Montage bzw. die generelle Handhabung des Verschlusses und seiner Bestandteile. Es ist jedoch zu beachten, dass sich das Verschlussorgan beim Entleeren eines Schüttgutbehälters genau im Fliessbereich des Schüttgutes befindet. Damit beim Entleerungsvorgang dennoch möglichst wenig bzw. kein Schüttgut an der Innenseite des Verschlussorgans hängen oder liegen bleibt bzw. das Verschlussorgan den Ausfliessvorgang möglichst wenig behindert, umfasst das Verschlussorgan erfindungsgemäss einen kegelförmigen Abschnitt und einen daran anschliessenden zylinderförmigen Abschnitt. Der Verschluss wird dann so in der Behälterwandung befestigt, dass die Spitze des kegelförmigen Abschnitts ins Innere des Behälters zeigt und entsprechend schliesst der zylinderförmige Abschnitt am breiten Ende des kegelförmigen Abschnitts an. In der Schliessstellung des Verschlussorgans liegen sich entsprechend der Innenbereich des Anschlussflansches und der äussere Umfang des zylinderförmigen Abschnitts des Verschlussorgans gegenüber.

Bei der erfindungsgemässen Verschlussanordnung ist das erste Abstreifelement an einem vom kegelförmigen Abschnitt entfernt liegenden Endbereich des Verschlussorgans angeordnet. So ist sichergestellt, dass das erste Abstreifelement möglichst die gesamte Innenseite des Anschlussflansches, d. h. von oben bis unten, von Verunreinigungen befreit.

Das zweite Abstreifelement kann grundsätzlich irgendwo an der inneren Oberfläche des Anschlussflansches angebracht sein. Allerdings ist es von Vorteil, wenn es so angeordnet ist, dass es oberhalb des ersten Abstreifelements zu liegen kommt, wenn das Verschlussorgan in seiner Schliessstellung ist. Oder in anderen Worten: Das zweite Abstreifelement ist derart am Anschlussflansch angeordnet, dass es in einer die Durchlassöffnung verschliessenden Schliessstellung des Verschlussorgans einem Bereich des zylinderförmigen Abschnitts gegenüberliegt, der dem kegelförmigen Abschnitt des Verschlussorgans näherliegt als das erste Abstreifelement. Mit Vorteil ist das zweite Abstreifelement im Einlaufbereich des Anschlussflansches, d. h. am oberen Ende der nach innen weisenden Oberfläche des Anschlussflansches angeordnet.

Auf diese Weise ist gewährleistet, dass beim Schliessen des Verschlussorgans kein Oberflächenbereich des Anschlussflansches dem zylinderförmigen Abschnitt des Verschlussorgans gegenüberliegt, der nicht zuvor durch das zweite Abstreifelement gereinigt worden ist. Dies verbessert die ohnehin schon gute Dichtwirkung zwischen Verschlussorgan und Anschlussflansch nochmals erheblich.

Bei einer weiteren bevorzugten Ausführungsform der Erfindung umfasst der Verschluss zur Abdichtung zwischen dem Anschlussflansch und dem Verschlussorgan in einer die Durchlassöffnung verschliessenden Schliessstellung des Verschlussorgans eine ringförmige Verschlussdichtung. Diese ist vorzugsweise aus einem elastisch verformbaren Material gefertigt. Sie besteht beispielsweise aus einem für solche Anwendungen bekannten Material, insbesondere aus einem formfesten, elastisch verformbaren Kunststoff, vorzugsweise aus einem Elastomer wie etwa EPDM (Ethylen-Propylen-Dien-Kautschuk), Silikonkautschuk etc. Dies gilt auch für die nachfolgend erwähnten Dichtungen oder Dichtungselemente. Da sich das Verschlussorgan in seiner Schliessstellung im Innenbereich des Anschlussflansches befindet, ist auch die Verschlussdichtung insbesondere in einem inneren Bereich des ringförmigen Anschlussflansches angeordnet. Sie kann allerdings auch an dem nach aussen zur Innenseite des Anschlussflansches hin gerichteten, zylinderförmigen Abschnitt des Verschlussorgans angebracht sein. Während die beiden Abstreifelemente dafür sorgen, dass sich zwischen dem Anschlussflansch und dem Verschlussorgan in der Schliessstellung keine Verunreinigungen mehr befinden, dichtet diese Verschlussdichtung diesen Bereich optimal ab und verhindert, dass ungewollt Material, d. h. insbesondere Schüttgut aus dem Schüttgutbehälter austritt bzw. in diesen hinein gelangt.

Als Material für das Verschlussorgan bzw. den Anschlussflansch, vorzugsweise für beide, ist ein im Gegensatz zu den Dichtungen nicht elastisch verformbares Material bestens geeignet. Es kann sich beispielsweise um ein polymeres Material wie etwa ein thermoplastisches oder ein duroplastisches Material handeln, wobei vorzugsweise ein thermoplastisches Material verwendet wird, da dieses schweissbar ist. Polypropylen bzw. Polyethylen hat sich für diesen Zweck als besonders gut geeignet herausgestellt. Metallische Ausführungen sind natürlich auch möglich. So ist beispielsweise Stahl, insbesondere Edelstahl gut für diesen Zweck geeignet, aber auch Aluminium wäre durchaus möglich. Weiter ist es auch möglich, entweder den Anschlussflansch oder das Verschlussorgan aus einem Metall herzustellen und das jeweils andere Element aus einem polymerischen Material.

Als Material für das erste bzw. das zweite Abstreifelement, vorzugsweise für beide, wird im Gegensatz dazu mit Vorteil ein elastisch verformbares Material verwendet. Dies hat den Vorteil, dass sich die Abstreifelemente, wenn sie der jeweils gegenüberliegenden Oberfläche entlangstreifen, dem jeweiligen Oberflächenprofil besser anpassen können und so das Reinigungsergebnis verbessern. Die Abstreifelemente können auch aus einem nicht oder nur wenig elastisch verformbaren Material ausgebildet sein, wobei in einem solchen Fall die Oberflächenbereiche nicht zu starke Krümmungen aufweisen sollten, damit diese auch korrekt gereinigt werden. Hierbei wird die notwendige Verformung beispielsweise auch durch die Geometrie der zusammenwirkenden Elemente Anschlussflansch bzw. Verschlussorgan unterstützt.

Die Andockvorrichtung umfasst zur Abdichtung zwischen dem Gehäuse und dem Verschlussbetätigungselement in einer Schliessstellung eine am Verschlussbetätigungselement angeordnete Dichtung aus einem elastisch verformbaren Material.

Die Dichtung steht in der Schliessstellung und ohne einen an eine Anschlusspartie angeschlossenen Verschluss eines Schüttgutbehälters unter einer radialen Druckspannung, so dass die Dichtung an einen Wirkbereich der Anschlusspartie gepresst ist. Die Detailbeschreibung zur Dichtung findet sich weiter unten.

Eine weitere Aufgabe der Erfindung ist es, ein dem eingangs genannten technischen Gebiet zugehörendes Verfahren zum Verschliessen eines erfindungsgemässen Verschlusses zu schaffen, welches eine bessere Dichtigkeit des Verschlusses zur Folge hat.

Die Lösung der Aufgabe ist durch die Merkmale des Anspruchs 7 definiert. Bei der Erfindung handelt es sich um ein Verfahren zum Verschliessen eines Verschlusses, wie er vorgängig beschrieben worden ist. Zum Verschliessen wird das Verschlussorgan in einer Bewegungsrichtung senkrecht zur Durchlassöffnung von einer die Durchlassöffnung offen lassenden Offenstellung in eine die Durchlassöffnung verschliessende Schliessstellung des Verschlussorgans bewegt, wobei Verunreinigungen von dem am Verschlussorgan angeordneten ersten Abstreifelement von einer inneren Oberfläche des Anschlussflansches abgestreift werden.

Bei einer bevorzugten Ausführungsform des erfindungsgemässen Verschlusses werden natürlich auch Verunreinigungen von dem an einer Innenseite des Anschlussflansches angeordneten zweiten Abstreifelement von einer äusseren Oberfläche des Verschlussorgans abgestreift.

Um die Dichtigkeit des Verschlusses weiter zu erhöhen, kann der Schliessvorgang nicht nur ein Mal durchgeführt, sondern vorzugsweise mehrmals, d. h. zwei oder mehr Mal. D. h. das Verschlussorgan wird nach dem Verschliessen des Anschlussflansches wieder in Richtung der Offenstellung und dann zurück in die Schliessstellung bewegt. Hierbei ist allerdings darauf zu achten, dass beim Verfahren des Verschlussorgans in Richtung der Offenstellung der Verschluss nicht wieder soweit geöffnet wird, dass Schüttgut aus dem Schüttgutbehälter ausfliessen kann und die bereits gereinigten Oberflächen wieder verschmutzen würde. Auf diese Weise werden weitere Verunreinigungen von einer

Oberfläche des Anschlussflansches und insbesondere auch von einer äusseren Oberfläche des Verschlussorgans abgestreift werden. Dieser Vorgang wird nun insbesondere zwei oder mehrere Male wiederholt.

Die Bewegung des Verschlussorgans in der Bewegungsrichtung kann auf unterschiedliche Arten erfolgen. Es kann beispielsweise manuell bewegt werden oder es kann von einer am Verschluss oder am Schüttgutbehälter angeordneten Verstellvorrichtung bewegt werden. Bei einer bevorzugten Ausführungsform des erfindungsgemässen Verfahrens wird das Verschlussorgan allerdings mit einem Verschlussbetätigungselement einer Andockvorrichtung zum Andocken des Verschlusses zum Entleeren bzw. Füllen eines den Verschluss umfassenden Schüttgutbehälters in der Bewegungsrichtung bewegt.

Die Erfindung betrifft auch einen Schüttgutbehälter. Dieser weist eine Behälterwandung und einen Verschluss auf, wie er vorgängig beschrieben worden ist. Erfindungsgemäss ist dabei die Behälterwandung an dem Anschlussflansch des Verschlusses befestigt.

Die Behälterwandung kann dabei einlagig sein, wobei sie wie schon erwähnt an dem Anschlussflansch des Verschlusses befestigt, beispielsweise mit diesem verschweisst oder zwischen mehreren Elementen des Anschlussflansches eingeklemmt sein kann. Sie kann beispielsweise auch mit dem Anschlussflansch verklebt, daran angeschraubt oder sonst wie daran befestigt sein. Die Behälterwandung kann auch mehrlagig ausgebildet sein, wie dies etwa bei einem Fass mit Inliner der Fall ist, wo die äussere Lage beispielsweise durch ein Metall- oder Kunststofffass gebildet wird und der Inliner typischerweise aus einem schweissbaren Kunststoff oder einem Textilstoff besteht. Natürlich können bei mehrlagigen Behälterwandungen auch alle oder mehrere Lagen aus demselben Material bestehen. Zudem sind auch bei mehrlagigen Behälterwandungen sämtliche Lagen an dem Anschlussflansch des Verschlusses befestigt bzw. befestigbar. Der Anschlussflansch kann beispielsweise aus drei ringförmigen Flanschelementen bestehen, wobei eine innere Lage zwischen dem innersten und dem mittleren Flanschelement und die äussere Lage zwischen dem mittleren und dem äussersten Flanschelement befestigt ist.

Die Andockvorrichtung umfasst ein Gehäuse sowie eine Anschlusspartie zum Anschliessen eines Verschlusses. Die Anschlusspartie ist beispielsweise derart ausgebildet, dass ein Anschlussflansch eines Verschlusses eines Schüttgutbehälters dicht daran angeschlossen bzw. angekoppelt werden kann. Die Andockvorrichtung umfasst weiter eine Verschlussbetätigungsvorrichtung zur Betätigung eines Verschlusses eines angeschlossenen Schüttgutbehälters. Die Verschlussbetätigungsvorrichtung wiederum umfasst ein Verschlussbetätigungselement und eine Verstellvorrichtung, mit welcher das Verschlussbetätigungselement wahlweise zwischen einer Schliessstellung und einer Offenstellung bewegbar ist. Der Verschluss des Schüttgutbehälters wird dabei derart betätigt, dass beispielsweise ein Teil davon mit Hilfe des Verschlussbetätigungselements aus einer Schliesslage in eine Öffnungslage bewegt wird bzw. umgekehrt. Die Bewegung des Verschlussbetätigungselements erfolgt hierbei entlang einer bestimmten Bewegungsrichtung auf und ab bzw. je nach Lage hin und her. Es ist zu beachten, dass es vorzugsweise mehrere Offenstellungen und genau eine Schliessstellung gibt, zwischen denen das Verschlussbetätigungselement hin und her bewegt wird. Bei einer besonders bevorzugten Variante der Erfindung gibt es praktisch beliebig viele Offenstellungen, da das Verschlussbetätigungselement stufenlos in eine beliebige Stellung zwischen der Schliessstellung in einer maximalen Offenstellung bewegt werden kann. Allerdings kann die Verstellvorrichtung auch derart ausgebildet sein, dass das Verschlussbetätigungselement nur genau eine Offenstellung und/oder mehrere Schliessstellungen einnehmen kann.

Bei festen Stoffen oder Flüssigkeiten wird der Schüttgutbehälter für dessen Entleerung typischerweise mit seiner Öffnung nach unten positioniert und die Andockvorrichtung wird unterhalb des Schüttgutbehälters angeordnet, sodass das Schüttgut der Schwerkraft folgend nach unten ausfliessen kann. Dies ist auch bei gasförmigen Stoffen mit hoher Dichte der Fall, was im vorliegenden Fall bedeutet, dass das Gas in Bezug auf die Umgebung keinen statischen Auftrieb erfährt. Entsprechend wird der Schüttgutbehälter bei gasförmigem Schüttgut geringer Dichte (die einen statischen Auftrieb erfahren) mit seiner Öffnung nach oben und die Andockvorrichtung oberhalb des Schüttgutbehälters positioniert, damit das Schüttgut dem Auftrieb folgend nach oben ausfliessen kann.

Die Andockvorrichtung umfasst eine Dichtung, welche zur Abdichtung dient zwischen dem Gehäuse und dem Verschlussbetätigungselement in der Schliessstellung und ohne einen an die Anschlusspartie angeschlossenen Verschluss eines Schüttgutbehälters.

Die Dichtung steht in der Schliessstellung und ohne einen an die Anschlusspartie angeschlossenen Verschluss eines Schüttgutbehälters unter einer radialen Druckspannung, so dass die Dichtung an einen Wirkbereich der Anschlusspartie gepresst ist. Die Anschlusspartie ist am oberen Teil des Gehäuses der Andockvorrichtung angeordnet. Die Anschlusspartie kann daher als ein Teil des Gehäuses der Andockvorrichtung angesehen werden oder auch als ein vom Gehäuse getrenntes Element.

Die Dichtung besteht aus einem für solche Anwendungen bekannten Material, insbesondere aus einem formfesten, elastisch verformbaren Kunststoff, vorzugsweise aus einem Elastomer wie etwa EPDM (Ethylen-Propylen-Dien-Kautschuk), Silikonkautschuk etc. Dies gilt auch für die nachfolgend erwähnten Dichtungen oder Dichtungselemente.

Die Dichtwirkung der Dichtung beruht auf der radialen, ermüdungsfreien Druckspannung. Die Dichtung muss also nicht aufgeweitet oder gedehnt werden, was zu einer Materialermüdung und somit zu einer nachlassenden Dichtwirkung führen würde. Der Vorteil dieser Dichtung besteht weiter darin, dass die Dichtungswirkung nicht von der Eigenspannung der Dichtung und der Zugspannung in der Dichtung abhängig ist und dass der radiale Anpressdruck konstant bleibt. Das gewährleistet eine permanente überdrucksichere Staub- und Gasdichtigkeit des Gesamtsystems, im Besonderen auch dann, wenn kein Schüttgutbehälter an die Andockvorrichtung angedockt ist.

Dadurch, dass einerseits zwischen dem Verschlussbetätigungselement und dem Gehäuse der Andockvorrichtung eine derartige Dichtung angeordnet ist, wird verhindert, dass z.B. Fremdpartikel - woher auch immer - unbeabsichtigt in die Andockvorrichtung gelangen können und dass andererseits verhindert wird, dass Schüttgut oder Dämpfe und Gase aus der Andockvorrichtung austreten kann. Entsprechend wird auf diese Weise auch die Kontamination der Aussenfläche des Verschlussbetätigungselements, der Andockvorrichtung und generell der Umgebung mit Schüttgut oder Dämpfen und Gasen unterbunden.

Da die Einfüll- bzw. Entleerungsöffnungen der Verschlüsse solcher Schüttgutbehälter zumindest ringförmig, üblicherweise sogar rotationssymmetrisch, d. h. kreisringförmig ausgebildet sind, ist die Dichtung bei einer bevorzugten Ausführungsform der Erfindung ebenfalls ringförmig und mit Vorteil eben rotationssymmetrisch ausgebildet und entlang eines äusseren Umfangs des Verschlussbetätigungselements angeordnet.

Alternativ könnte die Dichtung auch aus mehreren einzelnen Abschnitten bestehen, die aneinandergelegt werden. Allerdings besteht bei einer solchen Ausführung bei jedem Übergang zwischen zwei Abschnitten die Gefahr einer Undichtigkeit.

Die Dichtung umfasst vorzugsweise einen Dichtungsabschnitt mit einem Wirkbereich, wobei dieser Wirkbereich auf einen Wirkbereich der Anschlusspartie gepresst ist.

In einer bevorzugten Ausführungsvariante ist der Dichtungsabschnitt eine radial nach aussen zur Anschlusspartie hin zeigende Dichtlippe. Der Dichtungsabschnitt kann aber auch einen beliebigen Teil der Dichtung darstellen, der dazu geeignet ist, die Dichtung mit dem Wirkbereich der Anschlusspartie in Kontakt zu bringen.

Der Wirkbereich kann flächenförmig, linienförmig oder quasi punktförmig sein. Durch den Anpressdruck des Wirkbereichs des Dichtungsabschnitts der Dichtung auf den Wirkbereich der Anschlusspartie wird die Dichtwirkung in jedem Fall gewährleistet und verbessert.

Bei einer weiter bevorzugten Ausführungsform der Erfindung umfasst die ringförmige Dichtung eine kreisringförmige Basis und einen an die Basis angeformten, sich in Bezug auf die Bewegungsrichtung radial nach aussen erstreckenden, kreisringförmigen Dichtungsabschnitt. Zur Erreichung einer guten Dichtwirkung ist der Aussendurchmesser des kreisringförmigen Dichtungsabschnitts mit Vorteil grösser als ein Innendurchmesser des dem Dichtungsabschnitt in einer Schliessstellung des Verschlussbetätigungselements gegenüberliegender Oberflächenabschnitt an einer Innenseite des Gehäuses. Mit diesem Oberflächenabschnitt wirkt der Dichtungsabschnitt dichtend zusammen.

Die Form der Dichtung, d. h. die Form des Querschnitts der Dichtung, in jenem Bereich, der für die Dichtwirkung zwischen dem Gehäuse und dem Verschlussbetätigungselement entscheidend ist, kann beispielsweise oval, elliptisch oder auch rund ausgebildet sein. Dieser Bereich wird nachfolgend auch als Wirkbereich bezeichnet. Dieser Wirkbereich kann auch geradlinig ausgebildet sein, wobei dessen Ausrichtung im Grunde frei wählbar ist. Die Form des Wirkbereichs kann selbstverständlich auch in Abhängigkeit der Form des Gehäuses bzw. des Verschlussbetätigungselements in dem Bereich, wo eine Abdichtung erreicht werden soll, gewählt werden. Diese Bereiche des Gehäuses wie auch des Verschlussbetätigungselements sind vorzugsweise axial ausgerichtet, d. h. verlaufen in diesem Bereich parallel zur Bewegungsrichtung des Verschlussbetätigungselements. Dies insbesondere deshalb, damit das Entleeren des Schüttgutes möglichst fliessend erfolgen kann und nicht durch Abschnitte des Gehäuses oder des Verschlussbetätigungselements behindert werden, welche in den Strömungsbereich des Schüttgutes eingreifen, wie dies bei nicht-axialer Ausrichtung der entsprechenden Bereiche des Gehäuses bzw. des Verschlussbetätigungselements der Fall wäre.

Der Dichtungsabschnitt ist beispielsweise im Wesentlichen rechteckig ausgebildet und mit einer Schmalseite an die Basis angeformt. Der Wirkbereich ist in diesem Fall an einer freien Stirnseite dieses Abschnitts ausgebildet. Auf diese Weise wird nicht nur die gewünschte radiale Dichtwirkung zwischen dem stirnseitig angeordneten Wirkbereich und dem Gehäuse bzw. dem Verschlussbetätigungselement erreicht, darüber hinaus ist das freie Ende dieses im Querschnitt rechteckigen Abschnitts auch beweglich. Es lässt sich so in gewissem Rahmen in der Bewegungsrichtung des Verschlussbetätigungselements bewegen. Dies ist insbesondere nützlich, wenn ein Verschluss eines Schüttgutbehälters an die Anschlusspartie der Andockvorrichtung angeschlossen ist. In diesem Fall soll die Dichtung zwischen dem Gehäuse und dem Verschlussbetätigungselement ja aufgehoben sein, damit das Schüttgut ungehindert aus dem Behälter ausfliessen kann. Dies kann nun auf einfache Art und Weise erreicht werden, indem der vom Verschlussbetätigungselement betätigte Teil des Verschlusses des Schüttgutbehälters beim Ankoppeln an die Anschlusspartie das freie Ende dieses im Querschnitt rechteckigen Abschnitts aus seiner radialen Position wegdrückt.

Um dieses Wegdrücken zu erleichtern, ist der Dichtungsabschnitt im Querschnitt vorzugsweise eher länglich ausgebildet, sodass seine Länge deutlich grösser ist wie seine Breite. Hierbei ist die Länge so zu wählen, dass diese leicht grösser ist als der radiale Abstand zwischen der Basis und der inneren Oberfläche des Gehäuseabschnittes, der dem Dichtungsabschnitt in einer Schliessstellung des Verschlussbetätigungselements gegenüberliegt. Dadurch wird der Dichtungsabschnitt bei der Positionierung des Verschlussbetätigungselements in seiner Schliessstellung leicht komprimiert, was eine verstärkte radiale Spannung zur Folge hat, wodurch eine besonders gute Dichtwirkung zwischen dem Gehäuse und dem Verschlussbetätigungselement resultiert.

Wie bereits erwähnt, dient die Dichtung zur Abdichtung zwischen dem Gehäuse und dem Verschlussbetätigungselement der Andockvorrichtung. Sie kann also grundsätzlich an einem dieser beiden Elemente angeordnet sein. Bei einer bevorzugten Ausführungsform ist die Dichtung am Verschlussbetätigungselement angeordnet. Dies hat den Vorteil, dass die Dichtung nicht nur zur Abdichtung zwischen Gehäuse und Verschlussbetätigungselement genutzt werden kann, sondern gleichzeitig auch noch zur Abdichtung zwischen dem Verschlussbetätigungselement und dem Verschlussorgan eines angekoppelten Schüttgutbehälters. Dies mit dem Ziel, den Aussenbereich des Verschlussbetätigungselements vor einer Verunreinigung mit Schüttgut zu schützen. Mit dem Aussenbereich ist hierbei der vom Gehäuse her gesehen aussenliegende Bereich gemeint.

Eine solche Abdichtung zwischen dem Verschlussbetätigungselement und dem von diesem betätigten Teil des Verschlusses kann natürlich auch oder zusätzlich mittels separater Dichtungsvorrichtungen erfolgen. Vorzugsweise geschieht dies jedoch, indem die Dichtung wenigstens einen weiteren Dichtungsbereich umfasst, der zur Abdichtung zwischen dem Verschlussbetätigungselement und dem Verschluss eines an die Andockvorrichtung angeschlossenen Schüttgutbehälters dient. Ein solcher Dichtungsbereich kann beispielsweise als Lippendichtung ausgebildet sein. Die Dichtung verhindert damit nicht nur eine Kontamination der Aussenfläche des Verschlussbetätigungselements mit Schüttgut, sondern auch Aussenfläche, d. h. der dem Verschlussbetätigungselement zugewandten Seite des von ihm betätigten Teils des Verschlusses.

Die Abdichtung zwischen dem Gehäuse und dem Verschlussbetätigungselement kann durch eine am Verschlussbetätigungselement angeordnete Dichtung erfolgen, die mit ihrem Wirkbereich direkt mit einem Oberflächenbereich des Gehäuses radial dichtend zusammenwirkt. Sie kann aber auch durch eine am Gehäuse angeordnete Dichtung erfolgen, die mit ihrem Wirkbereich direkt mit einem Oberflächenbereich des Verschlussbetätigungselements radial dichtend zusammenwirkt.

Vorzugsweise umfasst die Andockvorrichtung jedoch ein weiteres Dichtelement aus einem elastisch verformbaren Material, welches einen in Bezug auf die Bewegungsrichtung axial ausgerichteten Wirkbereich umfasst. Dieses Dichtelement ist dabei derart am Gehäuse der Andockvorrichtung angeordnet, dass in der Schliessstellung des Verschlussbetätigungselements und ohne einen an die Anschlusspartie angeschlossenen Verschluss eines Schüttgutbehälters eine radiale Dichtwirkung zwischen dem Wirkbereich dieses Dichtelements und dem Wirkbereich der am Verschlussbetätigungselement angeordneten Dichtung resultiert. D. h. die Dichtwirkung wird nicht zwischen der Dichtung und dem Gehäusematerial selber erreicht, sondern zwischen der Dichtung und dem weiteren Dichtelement. Dieses weitere Dichtelement ist zwar als eigenständiges Element ausgebildet aber im Zusammenhang mit der vorliegenden Erfindung als Teil des Gehäuses zu verstehen.

Natürlich ist es auch möglich, dass die Dichtung wie schon erwähnt am Gehäuse angeordnet ist, wobei das zusätzliche Dichtelement in diesem Fall am Verschlussbetätigungselement angeordnet und entsprechend als Teil des Verschlussbetätigungselements zu verstehen ist.

Eine Abdichtung zwischen dem Gehäuse der Andockvorrichtung und einem daran angeschlossenen Verschluss eines Schüttgutbehälters ist zwar grundsätzlich nicht unbedingt notwendig. Aber je nach Art des Schüttgutes ist eine solche Abdichtung von Vorteil oder praktisch unverzichtbar. Bei einer bevorzugten Ausführungsform umfasst daher die Andockvorrichtung eine an der Anschlusspartie angeordnete Flanschdichtung zur Abdichtung zwischen der Anschlusspartie und einem Anschlussflansch eines an die Andockvorrichtung angeschlossenen Verschlusses eines Schüttgutbehälters.

Vorzugsweise ist der Wirkbereich der Anschlusspartie parallel zur Bewegungsrichtung ausgerichtet. Das bietet den Vorteil, dass der Wirkbereich der Dichtung, welche am Verschlussbetätigungselement angeordnet ist parallel zum Wirkbereich der Anschlusspartie steht und damit die radiale Druckspannung von der Dichtung optimal vom Wirkbereich der Anschlusspartie aufgenommen werden kann.

Der Wirkbereich der Anschlusspartie kann aber auch in einem beliebigen Winkel zur Bewegungsrichtung stehen, wobei der Winkel typischerweise eher zwischen 45 Grad und 90 Grad liegt wie unter 45 Grad.

Je nach Beschaffenheit des Schüttgutes fliesst dieses praktisch von alleine und vollständig aus dem Schüttgutbehälter hinaus. Massnahmen zur Fluidisierung des Schüttgutes sind dann überflüssig. Allerdings kann es vorkommen, dass dies nicht geschieht und das Schüttgut nicht von alleine, nur langsam oder nicht vollständig aus dem Schüttgutbehälter hinausfliesst. Beispielsweise weil es sich während der Lagerung oder des Transports verklumpt oder sich sogenannte Schüttgutbrücken gebildet haben. Zur Fluidisierung d. h. Auflockerung des Schüttgutes zur Verbesserung der Fliesseigenschaften kann die Andockvorrichtung wie in der eingangs erwähnten EP 1 574 455 A1 mit einer Pneumatikgaseinrichtung versehen sein, mittels welcher Druckluft oder ein anderes Fluidisierungsgas in den Schüttgutbehälter einblasbar ist.

Zur Unterstützung des Entleerungsvorgangs und/oder des Befüllungsvorgangs umfasst die Andockvorrichtung jedoch mit Vorteil eine Vibrationseinheit, mit welcher sie in Schwingungen versetzbar ist. Die Vibrationseinheit kann beispielsweise innerhalb des Gehäuses oder der Verschlussbetätigungsvorrichtung angeordnet sein. Sie ist aber bevorzugt aussen am Gehäuse befestigt oder daran befestigbar. Diese Anordnung gewährleistet eine gute Fluidisierung des Schüttguts beim Entleeren, da die Schwingungen der Vibrationseinheit auf diese Weise gut vom Gehäuse via die Anschlusspartie auf den Verschluss und die Behälterwandung des Schüttgutbehälters übertragbar ist. Beim Befüllen dient die Vibrationseinheit insbesondere zur besseren Verteilung und auch zur Verdichtung des Schüttgutes im Schüttgutbehälter. Eine solche Vibrationseinheit ist insbesondere bei vergleichsweise kleinen Andockvorrichtungen von Vorteil, weil bei diesen das Platzangebot im Gehäuse begrenzt ist und beispielsweise kaum Raum für eine Pneumatikgaseinrichtung bietet. Von einer vergleichsweise kleinen Andockvorrichtung ist die Rede, wenn der Durchmesser ihrer Durchlassöffnung zur Entleerung des Schüttgutes unter 200 mm, beispielsweise im Bereich von 50 mm bis 150 mm liegt. Es ist aber auch möglich, eine externe Vibrationseinheit bei grösseren Andockvorrichtungen mit Durchlassöffnungen über 200 mm vorzusehen, wobei eine solche selbstverständlich auch im Innern des Gehäuses bzw. des Verschlussbetätigungselements angeordnet sein kann. Es können auch zwei oder mehr Vibrationseinheiten zur Fluidisierung des Schüttgutes vorgesehen sein. Die Amplitude und die Frequenz der Schwingungen jeder Vibrationseinheit kann dabei auf die Eigenschaften des Schüttgutes abgestimmt werden.

Bei einem Verfahren zum Verschliessen einer Andockvorrichtung wird das Verschlussbetätigungselement in einem ersten Schritt von der Offenstellung in einer Schliessrichtung in Richtung Schliessstellung über die Schliessstellung hinaus verfahren. In einem zweiten Schritt wird das Verschlussbetätigungselement entgegen der Schliessrichtung in die Schliessstellung verfahren.

Dabei bedeutet in Schliessrichtung, dass das Verschlussbetätigungselement von der Offenstellung in Richtung der Schliessstellung bewegt wird. Eine Offenstellung ist in einer bevorzugten Variante gegeben, wenn das Verschlussbetätigungselement nach oben verfahren ist, so dass zwischen Verschlussbetätigungselement und Anschlussflansch eine ringförmige Öffnung entsteht. In Schliessrichtung bedeutet in diesem Fall, dass das Verschlussbetätigungselement von oben nach unten verfahren wird, um die Öffnung zu schliessen und um die Schliessstellung zu erreichen. Alternativ kann die Offenstellung aber auch so definiert sein, dass sich das Verschlussbetätigungselement unterhalb des Anschlussflansches befindet. In diesem Fall bedeutet in Schliessrichtung, eine Bewegung von unten nach oben.

Der Aussendurchmesser der Dichtung ist grösser als der innere Durchmesser der Anschlusspartie. Folglich steht im ersten Schritt ein zur Anschlusspartie hin ragender Teil der Dichtung an einer äusseren Kante der Anschlusspartie an. Beim Verfahren weiter in Schliessrichtung wird dieser Teil der Dichtung entgegen der Schliessrichtung weggedrückt. Im zweiten Schritt, wenn das Verschlussbetätigungselement wieder leicht entgegen der Schliessrichtung verfahren wird, hängt der zur Anschlusspartie hin ragende Teil der Dichtung an einer Kante an einer Innenseite der Anschlusspartie an, so dass dieser Teil sich nicht weiter entgegen der Schliessrichtung bewegen kann. So ist der zur Anschlusspartie hin ragende Teil der Dichtung in Position gehalten. Dieser Teil der Dichtung wird durch die weitere Bewegung des Verschlussbetätigungselements in die Horizontale überführt und gleichzeitig zusammengepresst wodurch die radiale Druckspannung in der Dichtung entsteht. Durch diese radiale Druckspannung in der Dichtung wird eine besonders gute und gleichbleibende Dichtwirkung erreicht.

Das Verschlussbetätigungselement wird im ersten Schritt über eine Distanz D über die Schliessstellung hinaus verfahren, wobei die Distanz D bevorzugt mindestens einmal und höchstens dreimal einer Ausdehnung in Bewegungsrichtung eines Kontaktbereichs zwischen der Dichtung und der Anschlusspartie in der Schliessstellung entspricht. Alternativ kann die Distanz D auch maximal vier- bis fünfmal einer Ausdehnung in Bewegungsrichtung eines Kontaktbereichs der Dichtung entsprechen.

In einer bevorzugten Ausführungsform befindet sich das Verschlussbetätigungselement in der Offenstellung über den Anschlussflansch. Folglich ist bei dieser Ausführungsform die Schliessrichtung vertikal von oben nach unten. Das bietet den Vorteil, dass bei einem Schliessvorgang die Schliessrichtung mit der Fallrichtung des Schüttguts übereinstimmt und so die Gefahr einer Verklemmung minimiert wird.

Wie bereits erwähnt umfasst die Verschlussbetätigungsvorrichtung ein Verschlussbetätigungselement und eine Verstellvorrichtung, mit welcher das Verschlussbetätigungselement in einer Bewegungsrichtung verstellbar ist. Die Verstellvorrichtung kann beispielsweise lediglich einen Griff oder dergleichen umfassen, mit dem das Verschlussbetätigungselement manuell in der Bewegungsrichtung bewegt werden kann. Vorzugsweise umfasst die Verstellvorrichtung jedoch eine Antriebsvorrichtung, mit welcher das Verschlussbetätigungselement in der Bewegungsrichtung bewegt werden kann. Diese Bewegung kann beispielsweise durch eine manuelle Betätigung entsprechender Elemente der Antriebsvorrichtung erfolgen, beispielsweise kann eine manuell durch Drehen einer Kurbel oder eines Handrads oder dergleichen erzeugte Drehbewegung durch eine entsprechende Kupplung und/oder ein entsprechendes Getriebe in eine Bewegung des Verschlussbetätigungselements umgewandelt werden.

Müssen jedoch die Schüttgutbehälter automatisch entleert werden oder sind beispielsweise viele Entleerungen nötig, ist es von Vorteil, wenn die Bewegung des Verschlussbetätigungselements nicht manuell, sondern durch eine Antriebseinheit wie z. B. einen Motor erfolgt. Da solche Andockvorrichtung häufig in sensiblen Bereichen wie etwa in der Lebensmittelverarbeitung oder in der chemischen bzw. pharmazeutischen Industrie eingesetzt werden, sind Antriebseinheiten, die mit flüssigen oder gasförmigen Betriebsstoffen wie Benzin, Erdgas oder ähnlichem betrieben werden, eher ungeeignet, obwohl sie prinzipiell auch verwendet werden können. Die Antriebseinheit umfasst daher mit Vorteil einen Elektromotor, wobei grundsätzlich jede Art von Elektromotor einsetzbar ist. Mit Vorteil wird jedoch ein bürstenloser Elektromotor verwendet, damit der mechanische Abrieb reduziert bzw. vermieden werden kann. Zudem kann eine Steuerung vorgesehen sein, mit welcher der Elektromotor je nach Anwendung unterschiedlich gesteuert werden kann. So können beispielsweise Beschleunigung, Drehzahl und Anzahl der Umdrehungen des Motors in weiten Bereichen gewählt und auf die jeweilige Anwendung hin optimiert werden. Je nach Anwendung können aber selbstverständlich auch Hydraulik- oder Pneumatikantriebe oder jede andere Art von Antrieben verwendet werden.

Bei einer bevorzugten Ausführungsform umfasst die Verstellvorrichtung eine Achse, wobei das Verschlussbetätigungselement an der Achse befestigt ist und entsprechend durch eine axiale Bewegung der Achse verstellbar ist.

Eine solche axiale Bewegung der Achse ist auf vielfältige Art und Weise erreichbar. Sie kann beispielsweise so erreicht werden, dass die Rotation der Motorwelle über ein Schneckengetriebe oder dergleichen auf die Achse umgesetzt wird. Die Achse bewegt sich hierbei in axialer Richtung ohne eine Eigendrehung. Es ist aber grundsätzlich auch möglich, die Achse mit Hilfe des Motors in eine Drehbewegung zu versetzen, wobei die Achse beispielsweise ein Gewinde umfasst, welches in einer fixierten Mutter läuft, sodass sich die rotierende Achse in axialer Richtung verschiebt.

Je nach gewählter Kopplung bzw. Gewinde zwischen Motor und Achse kann die Antriebseinheit beispielsweise axial an die Achse angekoppelt sein. Allerdings läge die Antriebseinheit dann typischerweise im oder unterhalb des Gehäuses der Andockvorrichtung, sodass sie sich im Fliessbereich des Schüttgutes befinden würde. Die Antriebseinheit ist deshalb vorzugsweise radial zur Achse angeordnet.

In diesem Fall muss die Drehbewegung der Antriebseinheit typischerweise in eine dazu senkrechte Bewegung der Achse umgesetzt werden. Hierzu umfasst die Antriebsvorrichtung vorzugsweise ein Winkelgetriebe. Grundsätzlich kann hierfür jede Art von Getriebe eingesetzt werden, welche eine Drehbewegung um eine erste Achse in eine Drehbewegung um eine zweite Achse umzusetzen, die nicht parallel zur ersten Achse liegt.

Um mit einer möglichst geringen Antriebsleistung auszukommen, ist die Antriebsvorrichtung insbesondere als Kugelgewindetrieb ausgebildet. Eine solche Antriebsvorrichtung hat zudem den Vorteil, dass sie einen geringen Verschleiss aufweist sowie hohe Verfahrgeschwindigkeiten und eine hohe Positioniergenauigkeit erlaubt.

Da das Schüttgut beim Entleeren wie auch beim Befüllen von Schüttgutbehältern durch das Innere der Andockvorrichtung fliesst und folglich die Gefahr besteht, dass alles, was sich darin befindet, mit Schüttgut in Berührung kommt, wird der Motor und natürlich auch eine allfällige Steuerung vorzugsweise ausserhalb des Gehäuses angeordnet bzw. aussen daran befestigt. Die Motorwelle oder eine daran angekoppelte Transmissionsvorrichtung wird dann durch das Gehäuse hindurch geführt. Um auch die Verschmutzung sämtlicher innerhalb des Gehäuses angeordneten Teile des Antriebsstrangs zu vermeiden, werden diese vorzugsweise gekapselt ausgeführt. So wird höchstens die Kapselung verschmutzt, was auf die Funktion des Antriebsstranges jedoch keinerlei Einfluss hat.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Darstellung eines erfindungsgemässen Verschlusses in einer leicht geöffneten Position;
- Fig. 2: der Verschluss aus Fig. 1 in geschlossener Position;
- Fig. 3: eine vergrösserte Darstellung eines Details aus Fig. 1;
- Fig. 4: eine schematische Darstellung des erfinderischen Prinzips der gegenseitigen Reinigung von Verschlussorgan und Anschlussflansch in einer Offenstellung;
- Fig. 5: eine schematische Darstellung des Verschlussorgans und des Anschlussflansches aus Fig. 4 in einer Schliessstellung;
- Fig. 6: eine schematische Darstellung einer Andockvorrichtung mit angeschlossenem Schüttgutbehälter und geschlossenem Verschluss;
- Fig. 7: eine schematische Darstellung der Andockvorrichtung aus Fig. 6 mit geöffnetem Verschluss;
- Fig. 8: eine vergrösserte Darstellung eines Details der Andockvorrichtung aus Fig. 6 mit entkoppeltem Schüttgutbehälter;
- Fig. 9: eine schematische Darstellung einer weiteren Andockvorrichtung ohne angekoppelten Schüttgutbehälter;
- Fig. 10: eine vergrösserte Darstellung eines Details der Andockvorrichtung aus Fig. 9 mit entkoppeltem Schüttgutbehälter;
- Fig. 11: eine vergrösserte Darstellung desselben Details aus Fig. 9 mit angekoppeltem Schüttgutbehälter;
- Fig. 12: eine vergrösserte Darstellung der Anschlusspartie der Andockvorrichtung aus Fig. 4 mit dem daran angeschlossenen Verschluss aus Fig. 7;
- Fig. 13: eine schematische Darstellung eines weiteren Verschlusses mit einer Entkopplungsvorrichtung, angekoppelt an eine Andockvorrichtung;
- Fig. 14: eine schematische Darstellung des Verschlusses aus Fig. 13 entkoppelt von der Andockvorrichtung;
- Fig. 15: eine schematische Darstellung der gegenseitigen Reinigung von Verschlussorgan und Anschlussflansch in einer Offenstellung mit einem am Verschlussbetätigungselement und einem am Anschlussflanschangeordneten Abstreifelement;
- Fig. 16: eine schematische Darstellung des Verschlussbetätigungselements und des Anschlussflansches aus Fig. 15 in einer Schliessstellung;
- Fig. 17: eine schematische Darstellung des Verschlusses mit einem am Verschlussbetätigungselement angeordneten Abstreifelement sowie;
- Fig. 18: eine schematische Darstellung des Verschlusses mit einem in eine Dichtung integrierten Abstreifelement.

Grundsätzlich sind in den Figuren gleiche Teile mit gleichen Bezugszeichen versehen.

### Wege zur Ausführung der Erfindung

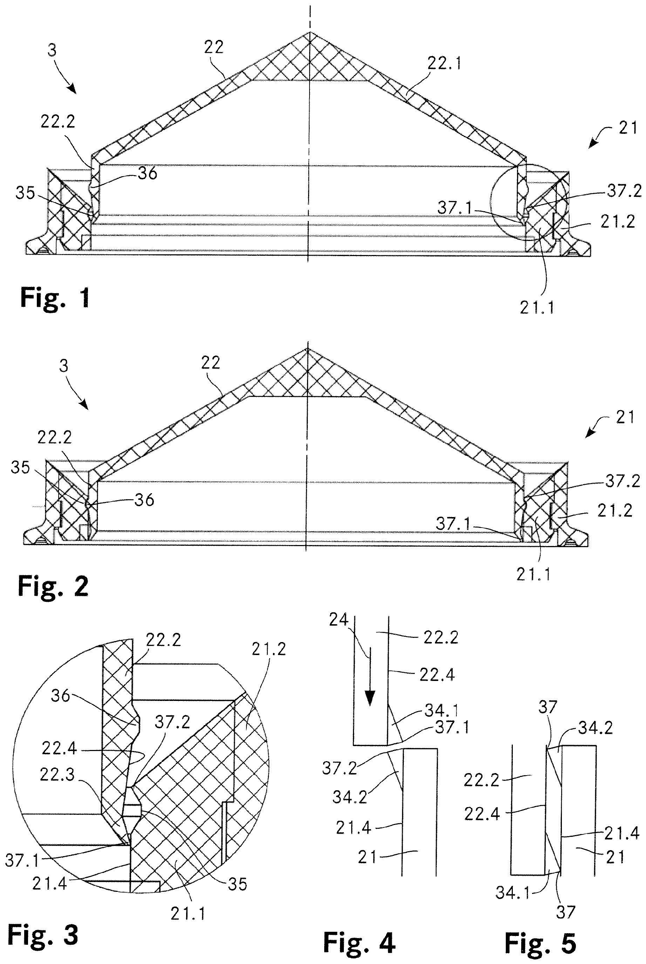

Die Figuren 1 und 2 zeigen eine schematische Darstellung eines erfindungsgemässen Verschlusses 3 im Querschnitt. In Fig. 1 ist der Verschluss 3 in einer leicht geöffneten Position und in Fig. 2 in geschlossener Position dargestellt. Fig. 3 wiederum zeigt eine vergrösserte Darstellung eines Details mit dem Berührungsbereich des Verschlusskegels 22 und des Anschlussflansches 21.

Der Verschluss 3 umfasst wiederum einen Verschlusskegel 22, welcher einen kegelförmigen Abschnitt 22.1 und einen zylindrischen Abschnitt 22.2 aufweist. Im Unterschied zu den vorherigen Beispielen umfasst jedoch der Anschlussflansch 21 zwei Flanschelemente, ein inneres Flanschelement 21.1 sowie ein äusseres Flanschelement 21.2. Die beiden Flanschelemente sind so ausgebildet, dass das innere Flanschelement 21.1 in dem äusseren Flanschelement 21.2 befestigt, beispielsweise verschweisst werden kann, sodass sie zusammen eine Einheit bilden. Die Flanschelemente 21.1, 21.2 können hierfür beispielsweise auch entsprechende Strukturen aufweisen, die ein Zusammenhalten der beiden Elemente verstärken und ein späteres Auseinandernehmen erschweren bzw. verhindern. Solche Strukturen können beispielsweise ähnlich einem Clip- oder Schnappverschluss ausgebildet sein. Im dargestellten Beispiel umfasst etwa das innere Flanschelement 21.1 an seinem äusseren Umfang eine umlaufende Nut und das äussere Flanschelement 21.2 an seinem inneren Umfang eine passende Feder.

Bei einem derart ausgebildeten Anschlussflansch 21 mit zwei Flanschelementen 21.1, 21.2 kann die Behälterwandung des Schüttgutbehälters beispielsweise zwischen diesen beiden Flanschelementen 21.1, 21.2 eingeklemmt werden (nicht dargestellt). Diese Klemmung erfolgt vorzugsweise so, dass die Behälterwandung vor der Montage der beiden Flanschelemente 21.1, 21.2 zwischen die beiden Flanschelemente 21.1, 21.2 geführt und die beiden Elemente dann zusammengesetzt werden. Es ist aber auch möglich, die Behälterwandung zuerst z. B. von oben durch das innere Flanschelement und dann von unten zwischen den beiden Flanschelementen 21.1, 21.2 nach oben zu führen. Es gibt grundsätzlich auch noch weitere Möglichkeiten, die Behälterwandung an bzw. zwischen den beiden Flanschelementen zu befestigen, aber die meisten behindern den Schüttgutfluss beim Entleeren des Schüttgutbehälters und machen daher wenig Sinn.

Es ist zu beachten, dass sich die Begriffe unten bzw. oben wie auch links und rechts im Zusammenhang mit der Beschreibung der Figuren auf die jeweilige Darstellung in der entsprechenden Figur beziehen. Damit soll nicht gemeint sein, dass die entsprechenden Elemente immer in dieser Ausrichtung angeordnet sein müssen.

Weiter ist an der Innenseite des inneren Flanschelements 21.1 eine umlaufende Nut 35 eingebracht. In diese Nut 35 greift eine am äusseren Umfang des zylindrischen Abschnitts 22.2 des Verschlusskegels 22 umlaufende Feder 36 ein, wenn der Verschlusskegel 22 zur Verschliessung der Öffnung des Anschlussflansches 21 in diesem befestigt wird. Auf diese Weise wird der Verschlusskegel 22 fest im Anschlussflansch 21 gehalten und ein unerwünschtes Öffnen des Verschlusskegels 22 wird verhindert.

Selbstverständlich kann der Anschlussflansch 21 auch aus mehr als aus zwei Flanschelementen bestehen, wobei die Behälterwandung bzw., bei einer mehrlagigen Behälterwandung wenigstens eine, mehrere oder alle Lagen zwischen zwei oder mehr Flanschelementen eingeklemmt oder auf sonst eine bekannte Art und Weise an einem oder mehreren der Flanschelemente befestigt oder angebracht werden können.

Fig. 3 zeigt im Detail eine Ausführungsform, bei der sich die erfindungsgemässen Abstreifelemente am Verschlussorgan 22 befinden. Der untere Rand des unteren Endes 22.3 des zylindrischen Abschnitts 22.2 des Verschlusskegels 22 ist als umlaufende Kante 37.1 ausgebildet, welche vom zylindrischen Abschnitt 22.2 her gesehen nach aussen weist. D. h. sie weist erfindungsgemäss in Richtung der inneren Oberfläche 21.4 des inneren Flanschelements 21.1. Diese Kante 37.1 dient als Abstreifelement, welches beim Verschliessen der Öffnung des inneren Flanschelements 21.1, d.h. beim nach unten Verfahren des Verschlusskegels 22, die nach innen weisende Oberfläche 21.4 des inneren Flanschelements 21.1 von allfällig anhaftendem Schüttgut befreit, indem es dieses nach unten abstreift. Zu diesem nach innen weisenden Oberflächenbereich gehört insbesondere auch die Nut 35. Weiter befindet sich eine Kante 37.2 am oberen Ende der Innenseite des inneren Flanschelements 21.1, welche in ähnlicher Weise beim nach unten Verfahren des Verschlusskegels 22, die nach aussen weisende Oberfläche 22.4 des zylindrischen Abschnitts 22.1 des Verschlusskegels 22 von allfällig anhaftendem Schüttgut befreit, indem es dieses quasi nach oben abstreift. Da sich auf diese Weise kein bzw. deutlich weniger Schüttgut zwischen dem Verschlusskegel 22 und dem Anschlussflansch 21 befindet, wird eine deutlich verbesserte Dichtigkeit des Verschlusses 3 des Schüttgutbehälters erreicht.

Die Figuren 4 und 5 zeigen eine einfache schematische Darstellung zur besseren Erläuterung des erfinderischen Prinzips. Dargestellt ist der untere zylindrische Bereich 22.2 eines Verschlusskegels sowie der obere Bereich eines Anschlussflansches 21. Am unteren Ende des zylindrischen Bereichs 22.2 ist ein Abstreifelement 34.1 angeordnet, das in dem hier gezeigten, einfachen Fall im Querschnitt dreieckig ausgebildet ist. Konkret ist dieses Dreieck mit seiner längsten Seite an den zylindrischen Bereich 22.2 angeformt, die kürzere Seite weist nach unten und die mittlere Seite nach oben. Die Spitze dieses Dreiecks bildet eine umlaufende Kante 37.1. In ähnlicher Weise ist am oberen Ende des

Anschlussflansches 21 ein Abstreifelement 34.2 angeordnet, wobei das Ganze spiegelbildlich ausgebildet ist. D. h. das Abstreifelement 34.2 ist wiederum dreieckig ausgebildet, ist mit seiner längsten Seite an den Anschlussflansch 21 angeformt, die kürzere Seite weist nach oben und die mittlere Seite nach unten. Die Spitze dieses Dreiecks bildet eine umlaufende Kante 37.2.

Beim Schliessvorgang wird nun der Verschlusskegel, d. h. der zylindrische Bereich 22.2 in Richtung des Pfeiles 24 und des Anschlussflansches 21 bewegt, wobei letzterer in seiner Position verbleibt. Fig. 4 zeigt die beiden Elemente kurz bevor sie sich berühren. Wird der zylindrische Bereich 22.2 weiter in Richtung des Pfeiles 24 bewegt, berühren sich als Erstes die beiden kurzen Seiten der dreieckigen Abstreifelemente 34.1, 34.2. Diese sind aus einem elastischen Material ausgebildet, sodass sie sich derart verformen und/oder so komprimiert werden, dass sie aneinander vorbeigleiten und der zylindrische Bereich 22.2 weiter nach unten bewegt werden kann. Sobald die beiden Kanten 37.1, 37.2 aneinander vorbeigestreift sind, nehmen die beiden Abstreifelemente 34.1, 34.2 wieder ihre ursprüngliche Form an. Hierbei, befreit die Kante 37.1 des Abstreifelements 34.1 zunächst die nach unten weisende, lange Seite des Abstreifelements 34.2 und danach die darunterliegende, innere Oberfläche 21.4 des Anschlussflansches 21 von Schüttgut oder anderen Verunreinigungen. Entsprechend reinigt das Abstreifelement 34.2 zunächst die nach oben weisende, lange Seite des Abstreifelements 34.1 und danach die darüber liegende, äussere Oberfläche 22.4 des zylindrischen Bereichs 22.2. D.h. beide Oberflächenbereiche 21.4, 22.4, die sich in der Schliessstellung gegenüberliegen, werden beim Schliessvorgang gleichzeitig gereinigt. Um die Reinigung ggf. weiter zu verbessern, kann der Verschlusskegel mit seinem zylindrischen Bereich 22.2 nochmals nach oben und dann wieder nach unten verfahren werden, um das Abstreifen von Verunreinigungen zu wiederholen. Dieser Vorgang kann beliebig oft wiederholt werden. Hierbei ist darauf zu achten, dass beim nach oben Fahren der Verschluss nicht wieder soweit geöffnet wird, dass Schüttgut aus dem Schüttgutbehälter ausfliessen kann und die bereits gereinigten Oberflächen wieder verschmutzen würde.

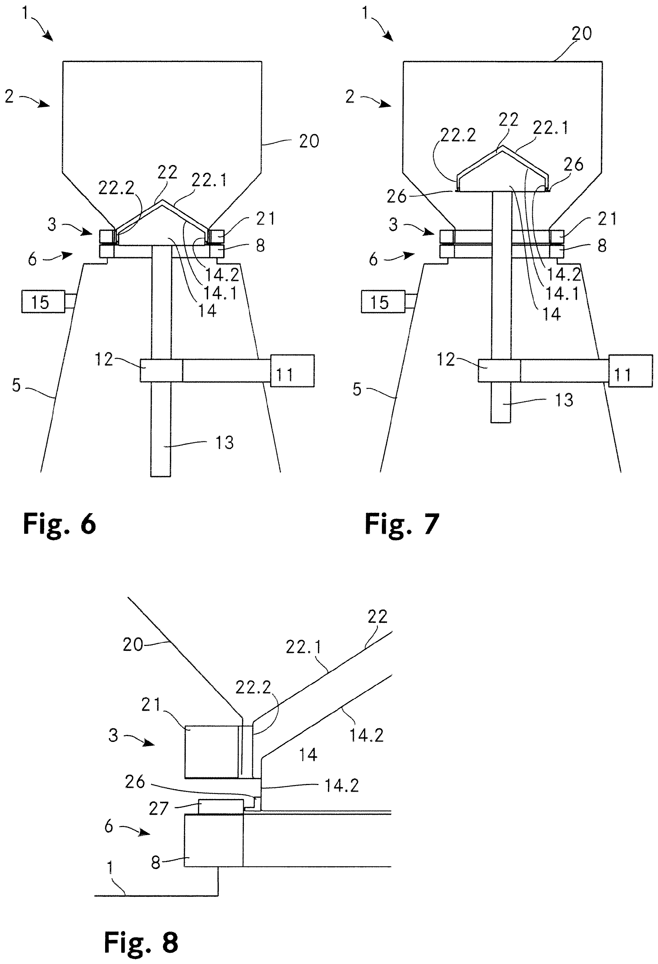

Die Figuren 6 bis 8 zeigen eine schematische Darstellung einer Andockvorrichtung 1 mit angeschlossenem Schüttgutbehälter 2. In Fig. 6 ist der Verschluss 3 des Schüttgutbehälters 2 geschlossenen, in Fig. 7 hingegen geöffnet dargestellt. Fig. 8 schliesslich zeigt ein vergrössertes Detail der erfindungsgemässen Abdichtung der Andockvorrichtung 1.

Die Andockvorrichtung 1 umfasst ein Gehäuse 5 sowie eine Anschlusspartie 6, welche einen Anschlussflansch 8 umfasst. Innerhalb des Gehäuses 5 ist eine Verschlussbetätigungsvorrichtung angeordnet, welche einen Motor 11, eine Transmissionseinheit 9, ein Winkelgetriebe 12, eine Antriebsspindel 13 sowie einen Hubkegel 14 als Verschlussbetätigungselement umfasst. Der Hubkegel 14 ist am oberen Ende der Antriebsspindel 13 befestigt. Er umfasst einen kegelförmigen Abschnitt 14.1 und einen unten daran anschliessenden zylindrischen Abschnitt 14.2.

Der Motor 11 ist horizontal und ausserhalb des Gehäuses 5 angeordnet. Die Transmissionseinheit 9 koppelt den Motor 11 mit dem Winkelgetriebe 12, welches beispielsweise als Schneckengetriebe ausgebildet ist. Der Motor 11 erzeugt eine Drehbewegung um eine horizontale Achse, wobei diese Drehbewegung von der Transmissionseinheit 9 zum Schneckengetriebe übertragen und von diesem in eine axiale Bewegung der Antriebsspindel 13 - hier in vertikaler Richtung - umgesetzt wird. Auf diese Art und Weise kann der Hubkegel 14 in einer vertikal liegenden Bewegungsrichtung nach oben bzw. unten bewegt werden. Der Motor kann jedoch auch vertikal angeordnet sein wobei die Transmissionseinheit dann die Drehbewegung linear zur Antriebsspindel überträgt.

Der Schüttgutbehälter 2 umfasst eine Behälterwandung 20 sowie einen Anschlussflansch 21 und einen Verschlusskegel 22. Sowohl der Anschlussflansch 21, der Verschlusskegel 22 wie auch der Anschlussflansch 8 der Anschlusspartie 6 sind rotationssymmetrisch ausgebildet, wobei die Figuren 6-8 einen schematischen Schnitt durch diese Vorrichtungen zeigen. Die Behälterwandung 20 des Schüttgutbehälters 2 ist am Anschlussflansch 21 befestigt. Im vorliegenden Beispiel ist die Behälterwandung 20 an der Innenseite des Anschlussflansches 21 festgeklebt, angeschweisst, festgeklemmt ober sonst wie befestigt sein. Die Behälterwandung 20 kann auch stirnseitig am Anschlussflansch 21 befestigt sein. Der Verschlusskegel 22 umfasst einen kegelförmigen Abschnitt 22.1 und einen unten daran anschliessenden zylindrischen Abschnitt 22.2.

Die Formen des Hubkegels 14 und des Verschlusskegels 22 sind hierbei aufeinander abgestimmt, sodass sich der Hubkegel 14 passend von unten in den Verschlusskegel 22 einfahren lässt und der Verschlusskegel 22 entsprechend vom Hubkegel 14 angehoben werden kann.

In den Fig. 6 und 7 ist der Schüttgutbehälter 2 mit seinem Anschlussflansch 21 an den Anschlussflansch 8 der Anschlusspartie 6 angekoppelt. In Fig. 6 ist weiter der Verschlusskegel 22 in seiner Schliessstellung gezeigt, in welcher er innerhalb des Anschlussflansches 21 angeordnet ist und mit seinem zylindrischen Abschnitt 22.2 dessen innenliegende Öffnung vollständig verschliesst. In diesem Beispiel, bei welchem die Behälterwandung 20 an der Innenseite des Anschlussflansches 21 befestigt ist, befindet sich die Behälterwandung 20 in der Schliessstellung des Verschlusskegels 22 zwischen diesem und dem Anschlussflansch 21. D. h. der Verschlusskegel 22 ist in direktem Kontakt mit der Behälterwandung 20 und verschliesst so den Schüttgutbehälter 2.

In Figur 7 ist der Verschluss 3 des Schüttgutbehälters 2 geöffnet dargestellt. D. h. die Antriebsspindel 13 ist mit dem an ihrem oberen Ende befestigten Hubkegel 14 angehoben. Dadurch ist auch der Verschlusskegel 22 angehoben, wodurch, da der Anschlussflansch 21 des Schüttgutbehälters an den Anschlussflansch 8 der Anschlusspartie 6 angekoppelt ist, die Öffnung des Anschlussflansches 21 des Schüttgutbehälters 2 freigegeben ist und so das Schüttgut aus dem Innern des Schüttgutbehälters 2 durch das Gehäuse 1 hindurch herausfliessen kann. Gut zu erkennen ist hierbei, dass das Hubkegel 14 bei dessen Anheben durch die nach oben bewegte Antriebsspindel 13 den Verschlusskegel 22 aus dem Anschlussflansch 21 des Schüttgutbehälters 2 herausdrückt und mit anhebt.

In den Figuren 6 und 7 schlecht zu erkennen und deshalb in Fig. 8 vergrössert dargestellt ist die erfindungsgemässe Dichtung 26 zwischen Hubkegel 14 und Anschlussflansch 8 der Anschlusspartie 6. Diese Dichtung 26 ist am äusseren Umfang des zylindrischen Abschnitts 14.2 des Hubkegels 14 angebracht und erstreckt sich entsprechend radial nach aussen. In Fig. 8 zu erkennen ist weiter ein an der Oberseite des Anschlussflansches 8 der Anschlusspartie 6 angebrachtes Dichtungselement 27, mit welchem der äussere Umfang der Dichtung 26, d. h. deren Stirnseite, dichtend zusammenwirkt. Auf diese Weise wird in der Schliessstellung des Hubkegels 14 die besondere radiale Spannung mit entsprechender Dichtwirkung zwischen dem Hubkegel 14 und dem Anschlussflansch 8 der Anschlusspartie 6 erreicht.

Weiter umfasst die Andockvorrichtung 1 eine Vibrationseinheit 15, welche am Gehäuse 5 befestigt ist. Diese Vibrationseinheit 15 erzeugt Schwingungen, welche via das Gehäuse 5 auf die Anschlusspartie 6 und entsprechend auf den Anschlussflansch 21 bzw. die Behälterwandung 20 eines an die Anschlusspartie 6 angeschlossenen Schüttgutbehälters 2 übertragen wird. Auf diese Weise wird der Schüttgutbehälter in Schwingung versetzt, was der Fluidisierung des Schüttgutes dient und so den Entleerungs- bzw. Befüllvorgang unterstützt.

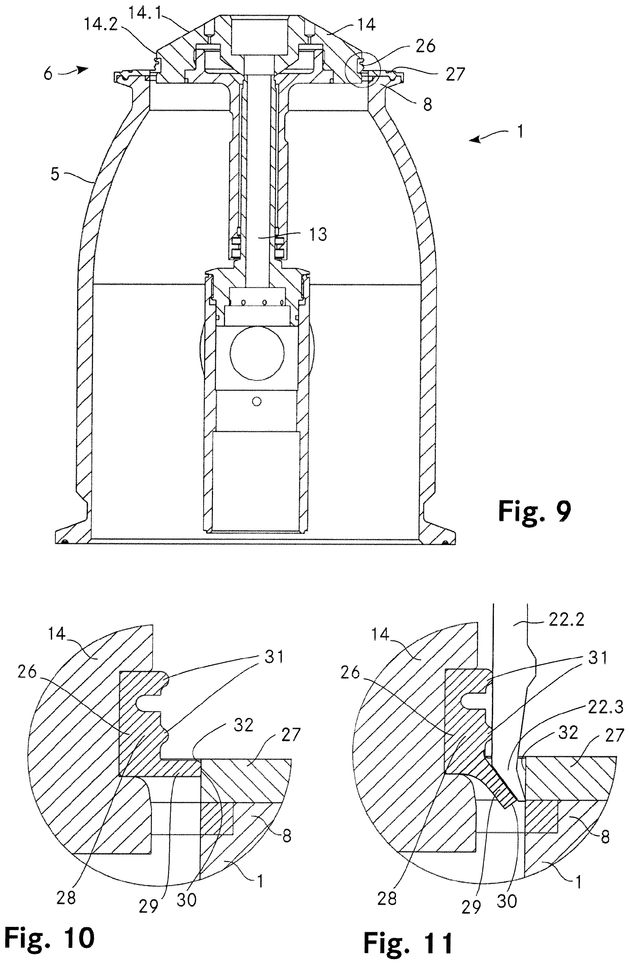

Fig. 9 zeigt eine schematische Darstellung einer weiteren Andockvorrichtung 1 ohne einen angekoppelten Schüttgutbehälter. Das Gehäuse 5 ist in diesem Beispiel haubenartig mit nach unten weisender Öffnung ausgebildet. Im oberen Bereich des Gehäuses 5 ist wiederum die Anschlusspartie 6 mit dem Anschlussflansch 8 ausgebildet.

Der Hubkegel 14 umfasst im Wesentlichen wiederum einen kegelförmigen Abschnitt 14.1 und einen zylindrischen Abschnitt 14.2, wobei der kegelförmige Abschnitt 14.1 eine abgeflachte Spitze umfasst und der zylindrische Abschnitt 14.2 nicht eine glatte, sondern eine strukturierte Oberfläche aufweist. Konkret umfasst der zylindrische Abschnitt 14.2 eine Ausnehmung zur Aufnahme der Dichtung 26. Die Dichtung 26 kann sowohl ein- als auch mehrteilig ausgebildet sein, d. h. aus mehreren ringförmigen Teilen bestehen, die konzentrisch an- und/oder ineinander gelegt werden.

Zum besseren Verständnis ist in Fig. 10 eine vergrösserte Darstellung des Bereichs der Andockvorrichtung 1 mit der Dichtung 26 gezeigt. Die Dichtung 26 umfasst eine Basis 28, an welcher mehrere verschiedene Abschnitte angeformt sind. Am unteren Ende ist ein erster, im Wesentlichen rechteckiger Abschnitt 29 an die Basis 28 angeformt. Dieser Abschnitt 29 sorgt für die radiale Dichtung zwischen dem Hubkegel 14 und dem Anschlussflansch 8 des Gehäuses 1 bzw. dem zusätzlichen Dichtungselement 27, welches auf dem Anschlussflansch 8 des Gehäuses 1 angeordnet ist. Er verfügt hierfür über einen Stirnbereich 30, der am äusseren Umfang des Abschnitts 29 und damit am äusseren Umfang der Dichtung 26 liegt. Dargestellt ist dieser Stirnbereich 30 als eben und parallel zur Bewegungsrichtung der Antriebsspindel 13 und damit des Hubkegels 14. Dies muss aber nicht zwingend so sein. Der Stirnbereich 30 kann auch eine nicht-ebene Oberfläche und einen Winkel zur Bewegungsrichtung der Antriebsspindel 13 aufweisen. Dieser radiale Stirnbereich 30 liegt in der Schliessstellung des Hubkegels 14 einem ebenfalls parallel zur Bewegungsrichtung des Hubkegels 14 liegenden Wirkbereich 32 des Dichtungselements 27 gegenüber. Die Länge des Abschnitts 29 bzw. der gesamten Dichtung 26, d. h. deren Länge in radialer Richtung, ist zur Erzielung einer bestmöglichen Dichtwirkung dabei mit Vorteil derart gewählt, dass sie minim länger ist als der Abstand zum Dichtungselement 27. In der Schliessstellung des Hubkegels 14 wird der Abschnitt 29 daher ganz leicht zusammengedrückt bzw. komprimiert (nicht dargestellt), wodurch die radiale Spannung für die gewünschte Dichtwirkung erreicht wird.

Die Dichtung 26 bzw. das Dichtungselement 29 ist dabei derart ausgebildet und angeordnet, dass durch eine axiale Verschiebung der Dichtung 26 am Ende des Schliessvorgangs eine radiale Anpressung der Dichtung 26 an das Dichtungselement 27 erreicht wird, was zu der radialen Spannung und der verstärkten Dichtwirkung führt. Während des Schliessvorgangs des Verschlussbetätigungselements wird dieses beispielsweise nach unten verfahren. Der Dichtungsabschnitt 29, dessen Durchmesser ja grösser ist als der innere Durchmesser des Anschlussflansches 8, steht folglich an der oberen Kante des Anschlussflansches 8 an und wird beim weiter nach unten fahren quasi nach oben weggedrückt. Danach wird das Verschlussbetätigungselement wieder leicht nach oben gefahren, wobei das freie Ende des Dichtungsabschnitts 29 an einer Kante an der Innenseite des Anschlussflansches anhängt und sich deshalb nicht weiter nach oben bewegen kann. Da auf diese Weise das freie Ende des Dichtungsabschnitts 29 gehalten ist, wird dieser durch die weitere Bewegung des Verschlussbetätigungselements in die Horizontale überführt und gleichzeitig zusammengepresst, wodurch die besondere Dichtwirkung erreicht wird. Dies kann natürlich auch in der anderen Bewegungsrichtung erfolgen. Wenn das umlaufende freie Ende des Dichtungsabschnitts 29 zuvor beispielsweise nach unten weggedrückt ist, kann der Dichtungsabschnitts 29 durch eine weitere Bewegung nach unten an einer entsprechenden Kante an der Innenseite des Anschlussflansches anhängen und wird dann entsprechend von oben her in die Waagrechte gepresst. Dies ist beispielsweise der Fall, wenn zuvor ein Verschluss angekoppelt war, dessen Verschlusskegel den Dichtungsabschnitt 29 nach unten gedrückt hat.

Weiter sind an der Basis 28 zwei Lippen 31 angeformt, die zur Abdichtung zwischen dem Hubkegel 14 und dem Verschlusskegel 22 eines an den Anschlussflansch 8 angekoppelten Verschlusses dient. Dies ist in Fig. 11 dargestellt. Der Hubkegel 14 befindet sich ebenfalls noch in seiner Schliessstellung aber im Gegensatz zu Fig. 10 zeigt Fig. 11 zusätzlich den zylindrischen Abschnitt 22.2 des Verschlusskegels 22 eines angekoppelten Verschlusses. Unter anderem wird der Verschlusskegel 22 durch die Dichtung 26 am Hubkegel gehalten, wenn dieser verstellt wird. Hierfür können aber auch weitere aktive oder passive Halte- oder Klemmmittel vorgesehen sein.

Die konkrete Ausbildung und Anordnung der Dichtung 26 bzw. des Abschnitt 29 sind dabei derart gewählt, dass das untere Ende 22.3 der zylindrischen Abschnitts 22.2 eines an den Anschlussflansch 8 angekoppelten Verschlusses den Abschnitt 29 nach unten wegdrückt. Dies ist ebenfalls in Fig. 11 gut zu erkennen. Ist nämlich ein Verschluss angekoppelt, ist eine Abdichtung zwischen dem Hubkegel 14 und dem Anschlussflansch 8 nicht mehr notwendig, insbesondere zum Entleeren des Schüttgutbehälters, d. h. wenn sich der Hubkegel 14 in einer Offenstellung befindet. Es ist sogar so, dass der Abschnitt 29 die Entleerung des Schüttgutes behindern würde, wenn er nicht nach unten weggedrückt, sondern wie in Fig. 10 dargestellt, radial vom Hubkegel abstehen würde. Er würde dann in den Flussbereich des Schüttgutes hineinragen, was unerwünscht ist.

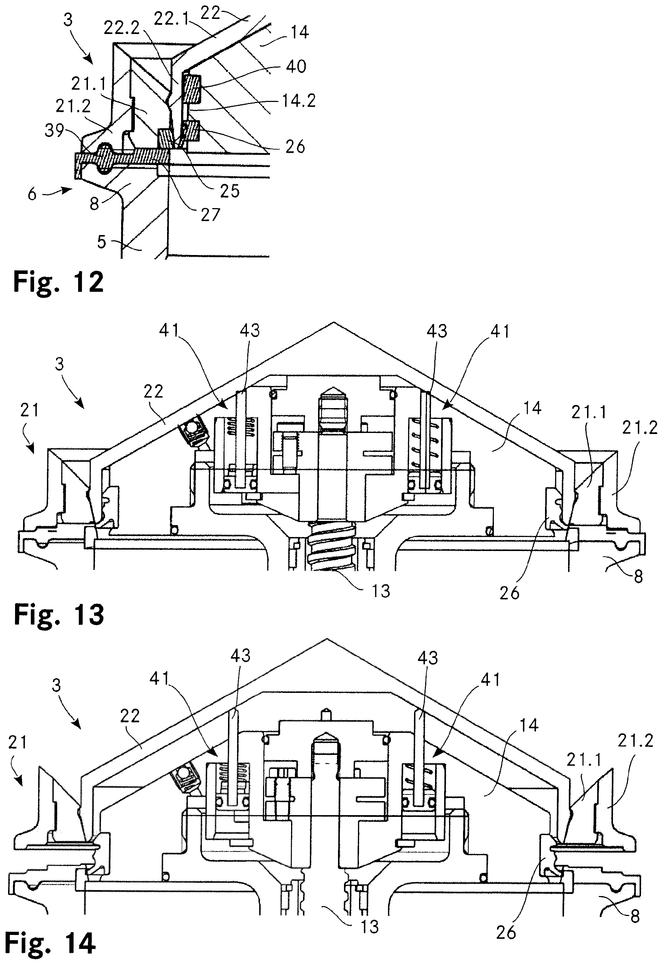

Das Dichtungselement 27 dient aber nicht nur zur Abdichtung zwischen dem Hubkegel 14 und dem Anschlussflansch 8 ohne angekoppelten Verschluss, sondern auch zur Abdichtung zwischen dem Anschlussflansch 8 und einem daran angekoppelten Verschluss eines Schüttgutbehälters. Hierzu umfasst das Dichtungselement 27 beispielsweise eine Verdickung, die in einer entsprechenden Nut des Anschlussflansches 8 liegt und gleich bzw. ähnlich wirkend ist wie ein in diese Nut separat eingelegter Dichtungsring. Das Dichtungselement 27 kann auch weitere Strukturierungen aufweisen zur Verbesserung der Abdichtung zwischen dem Anschlussflansch 8 und einem daran angekoppelten Verschluss. Fig. 12 zeigt eine vergrösserte Darstellung der Anschlusspartie der Andockvorrichtung 1 aus Fig. 9 mit dem daran angeschlossenen Verschluss 3 aus Fig. 1. Zusätzlich zu den bisher schon dargestellten Elementen zeigt Fig. 12 noch drei weitere Aspekte. Einerseits umfasst das Dichtungselement 27 eine Verdickung 39, welche sich nach oben und nach unten erstreckt und in entsprechenden Nuten des Anschlussflansches 8 bzw. des äusseren Flanschelements 21.2 erstreckt und auf diese Weise die Abdichtung zwischen dem Anschlussflansch 8 und dem äusseren Flanschelement 21.2 im angekoppelten Zustand verbessert. Zweitens zeigt Fig. 12 eine Haltevorrichtung 40, welche am äusseren Umfang des zylindrischen Abschnitts 14.2 des Hubkegels 14 angeordnet, beispielsweise in einer entsprechenden Nut eingelegt ist. Diese Haltevorrichtung dient zum Halten des Verschlusskegels 22 am Hubkegel 14 beim Öffnen bzw. Verschliessen des Verschlusses 3. Und drittens ist ein weiteres Dichtungselement 25 dargestellt, welches zur Abdichtung zwischen dem Anschlussflansch 21 des Verschlusses 3 und dem Verschlusskegel 22 in seiner Schliessstellung dient, wie dies in Fig. 12 gezeigt ist. Dieses Dichtungselement 25 ist insbesondere von Vorteil, wenn gasförmiges oder flüssiges Schüttgut verarbeitet werden soll. Auch dieses Dichtungselement 25 ist aus einem aus einem elastisch verformbaren Material wie beispielsweise einem Elastomer gefertigt. Bei einem zweiteiligen Anschlussflansch 21, wie dies im vorliegenden Beispiel der Fall ist, ist das Dichtungselement 25 folglich auf der Innenseite des inneren Flanschelements 21.1 angeordnet. Vorzugsweise ist es am unteren Ende des Flanschelements 21.1 angeordnet. Sie kann allerdings auch an der nach aussen weisenden Oberfläche 22.4 des zylindrischen Abschnitts 22.1 angebracht sein. Bei der ersterwähnten Position kann durch dieses Dichtungselement 25 nicht nur eine Abdichtung zwischen dem Anschlussflansch 21 und dem Verschlusskegel 22, sondern auch zwischen dem Anschlussflansch 21 des Verschlusses 3 und dem Anschlussflansch 8 der Andockvorrichtung erreicht werden, wenn der Verschluss 3 an die Anschlusspartie 6 angekoppelt ist.

Die Figuren 13 und 14 zeigen eine schematische Darstellung eines weiteren Verschlusses 3. Bei diesem Beispiel umfasst der Verschluss 3 eine Entkopplungsvorrichtung 41. Fig. 13 zeigt den Verschluss 3 angekoppelt an eine Andockvorrichtung und Fig. 14 zeigt ihn davon entkoppelt.

Dargestellt ist der Anschlussflansch 8 einer Andockvorrichtung sowie der Hubkegel 14 in seiner die Durchlassöffnung des Anschlussflansches 8 verschliessenden Schliessstellung. Auf der Unterseite des Hubkegels 14 ist die Antriebsspindel 13 befestigt, mit welcher der Hubkegel 14 in axialer Richtung der Antriebsspindel 13 bewegbar ist. Weiter dargestellt ist der Verschluss 3, der einen Anschlussflansch 21 aus zwei Flanschelementen 21.1, 21.2 umfasst, sowie dem Verschlusskegel 22, der ebenfalls in seiner Schliessstellung dargestellt ist, d. h. das Innere des inneren Flanschelements 21.1 vollständig verschliesst.

Die Entkopplungsvorrichtung 41 ist ein Mechanismus, der vollständig im Innern bzw. auf der Innenseite des Hubkegels 14 angeordnet ist. Er umfasst einen oder mehrere Stössel 43, welche relativ zum Hubkegel 14 in der gleichen Bewegungsrichtung bewegbar sind wie der Hubkegel 14, d. h. in Richtung der Antriebsspindel 13 und damit senkrecht zur Durchlassöffnung im Anschlussflansch 8. Die Stössel 43 sind beispielsweise in dem Gehäuse des Hubkegels 14 geführt, sodass sie sich ausschliesslich in der Bewegungsrichtung bewegen können. Und sie sind derart angeordnet, dass sie sich normalerweise in einer Passivstellung befinden, in welcher sie nach innen (gemäss Darstellung unten) gefahren sind und sich vollständig im Hubkegel 14 befinden. Beim nach aussen (gemäss Darstellung nach oben) fahren, treten die Stössel 43 mit ihrem oberen Ende aus dem Hubkegel 14 heraus und stossen auf diese Weise den Verschlusskegel 22 samt dem ganzen Verschluss 3 vom Hubkegel 14 und damit auch vom Anschlussflansch 8 bzw. der gesamten Andockvorrichtung weg. D. h. Andockvorrichtung und Verschluss 3 werden so voneinander entkoppelt.

Fig. 13 zeigt die Stössel 43 in ihrer Passivstellung, in der sie eingefahren sind. Der Verschlusskegel 22 liegt direkt auf dem Hubkegel 14 auf. In Fig. 14 sind die Stössel 43 hingegen ausgefahren und der Verschlusskegel 22 ist vom Hubkegel 14 abgehoben.

Bewegt werden die Stössel 43 von einem Antrieb, der pneumatisch, hydraulisch, elektrisch oder auf sonst eine geeignete Art ausgebildet ist. Ein pneumatischer Antrieb bietet sich an, da eine Pneumatikgasvorrichtung bei solchen Andockvorrichtungen oft schon vorhanden ist.

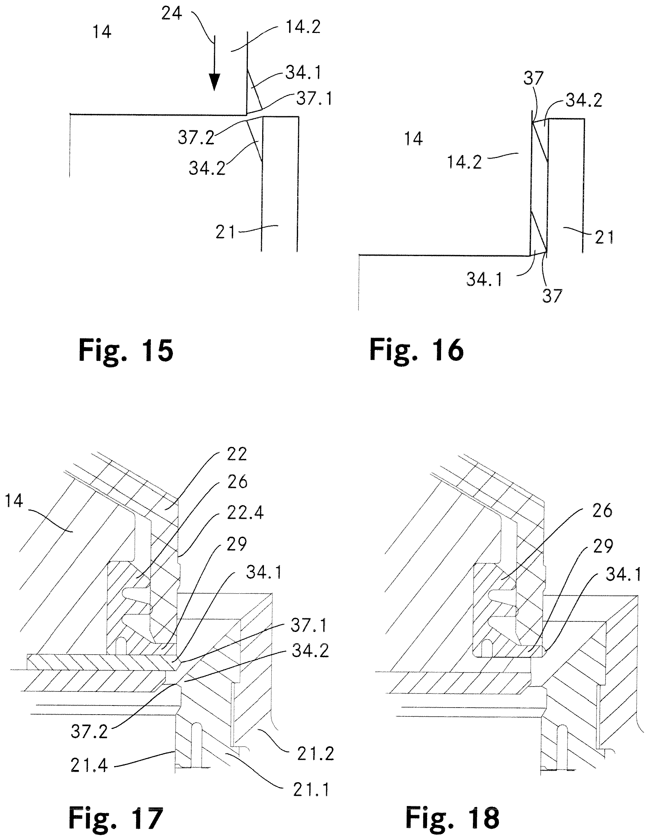

Die Figuren 15 und 16 zeigen eine einfache schematische Darstellung einer Ausführungsvariante bei der das Abstreifelement 34.1 am zylindrischen Bereich 14.2 des Hubkegels 14 angeordnet ist. Am oberen Ende des Anschlussflansches 21 ist wiederum ein Abstreifelement 34.2 angeordnet. Die Funktionsweise der Abstreifelemente 34.1, 34.2 mit den jeweiligen Kanten 37.1 und 37.2 ist dieselbe wie bei der Ausführungsvariante, bei der das Abstreifelement 34.1 am Verschlusskegel angeordnet ist, dargestellt in den Figuren 4 und 5.

Die Figur 17 zeigt eine Detailansicht einer Ausführungsform wie sie in den Figuren 15 und 16 dargestellt ist. Das Abstreifelement 34.1 befindet sich am Hubkegel 14 direkt unterhalb der Dichtung 26 mit dem radial nach aussen zeigenden Dichtungsabschnitt 29. Das Abstreifelement 34.1 hat im vorderen zur Innenseite 21.4 des Anschlussflansches 21.1 zeigenden Bereich eine dreieckige Form. Die Spitze dieses Dreiecks bildet eine umlaufende Kante 37.1. Im Unterschied zur oben beschriebenen Ausführung hat dieses Dreieck zwei gleich lange Seiten. Am oberen Ende des Anschlussflansches 21.1 ist ein zweites Abstreifelement 34.2 mit wiederum einer umlaufenden Kante 37.2 angeordnet.

Die Funktion des Abstreifelements 34.1 ist dieselbe wie bei der Ausführungsvariante, bei der das Abstreifelement 34.1 am Verschlusskegel 22 angeordnet ist, wie dargestellt in Figur 3. Beim nach unten Verfahren des Hubkegels 14 befreit das Abstreifelement 34.1 die nach innen weisende Oberfläche 21.4 des inneren Flanschelements 21.1 von allfällig anhaftendem Schüttgut, indem es dieses nach unten abstreift. Das Abstreifelement 37.2 befreit die nach aussen weisende Oberfläche 22.4 des Verschlusskegels 22 von allfällig anhaftendem Schüttgut, indem es diesen von unten nach oben abstreift.

Figur 18 zeigt eine weitere Ausführungsvariante bei der das Abstreifelement 34.1 in die Dichtung 26 integriert, respektive Teil davon ist. Das bedeutet, der vordere Teil des Dichtungsabschnitts 29 der Dichtung 26 übernimmt die Abstreiffunktion. Der vordere Teil ist vorzugsweise aus einem steiferen Material gefertigt als der übrige Teil der Dichtung 26. Beispielsweise besteht der vordere Teil aus einem harten Kunststoff und ist in das elastische Dichtungsmaterial der Dichtung 26 eingegossen. Es ist nicht zwingend, dass der Dichtungsabschnitt 29 die Abstreiffunktion übernimmt. Das Abstreifelement kann auch in einem anderen Teil der Dichtung 26 angeordnet sein.

Es besteht auch die Möglichkeit, dass in einer weiteren Ausführungsvariante am Flanschelement 21.1 kein Abstreifelement angebracht ist und somit nur das am Hubkegel 14 angebrachte Abstreifelement 34.1 vorhanden ist.

Zusammenfassend ist festzustellen, dass es die Erfindung erlaubt, einen Verschluss für einen Schüttgutbehälter wie auch eine Vorrichtung zum Entleeren oder Befüllen von Schüttgut weiter zu verbessern, indem deren Dichtigkeit erhöht wird. Und dies sowohl, wenn kein Schüttgutbehälter an die Vorrichtung angeschlossen ist als auch, wenn dies der Fall ist. Eine verbesserte Dichtigkeit ist insbesondere wichtig bei erhöhten Anforderungen an Hygiene oder Reinheit, wie dies etwa bei toxischem oder lebensmittelhaltigem Schüttgut oder auch bei Arzneimitteln der Fall ist oder wenn aus sonst einem Grund besondere Umstände vorliegen.

## Patentansprüche

1. Verschlussanordnung, umfassend einen Verschluss (3) für einen Schüttgutbehälter (2), welcher einen ringförmigen Anschlussflansch (21) mit einer Durchlassöffnung und einem Verschlussorgan (22) zum wahlweisen Verschliessen oder Öffnen der Durchlassöffnung umfasst, wobei das Verschlussorgan (22) einen kegelförmigen Abschnitt und einen daran anschliessenden zylinderförmigen Abschnitt umfasst und wobei eine Behälterwandung (20) des Schüttgutbehälters (2) an dem Anschlussflansch (21) befestigbar ist, **dadurch gekennzeichnet, dass** das Verschlussorgan (22) ein an einem vom kegelförmigen Abschnitt entfernt liegenden Endbereich des zylinderförmigen Abschnitts des Verschlussorgans angeordnetes, als umlaufende Kante ausgebildetes, in Richtung einer inneren Oberfläche (21.4) des Anschlussflansches (21) weisendes, erstes Abstreifelement (34.1) derart umfasst, dass bei einem Schliessvorgang zum Verschliessen der Durchlassöffnung des Anschlussflansches (21) Verunreinigungen von der inneren Oberfläche des Anschlussflansches (21) abstreifbar sind und möglichst eine gesamte Innenseite des Anschlussflansches von Verunreinigungen befreibar ist.

2. Verschlussanordnung nach Anspruch 1, wobei am Anschlussflansch (21) im Bereich der Durchlassöffnung ein umlaufendes, zweites Abstreifelement (34.2) angeordnet ist, mit welchem bei einem Schliessvorgang zum Verschliessen der Durchlassöffnung mit dem Verschlussorgan (22) Verunreinigungen von einer Oberfläche des Verschlussorgans (22) abstreifbar sind, wobei das erste und/oder das zweite Abstreifelement (34.1, 34.2) insbesondere als Halte- oder Klemmvorrichtung zum Halten des Verschlussorgans (22) in seiner Schliessstellung im Anschlussflansch (21) ausgebildet sind.

3. Verschlussanordnung nach Anspruch 2, wobei das zweite Abstreifelement (37.2) derart am Anschlussflansch (21) angeordnet ist, dass es in einer die Durchlassöffnung verschliessenden Schliessstellung des Verschlussorgans (22) einem Bereich des zylinderförmigen Abschnitts (22.2) gegenüber liegt, der dem kegelförmigen Abschnitt (21.1) des Verschlussorgans (22) näher liegt als das erste Abstreifelement (34.1).

4. Verschlussanordnung nach einem der Ansprüche 1 bis 3, wobei der Verschluss (3) zur Abdichtung zwischen dem Anschlussflansch (21) und dem Verschlussorgan (22) in einer die Durchlassöffnung verschliessenden Schliessstellung des Verschlussorgans (22) eine ringförmige Verschlussdichtung (35, 36) aus einem elastisch verformbaren Material umfasst, welche insbesondere in einem inneren Bereich des ringförmigen Anschlussflansches (21) angeordnet ist.

5. Verschlussanordnung nach einem der Ansprüche 1 bis 4, wobei wenigstens das Verschlussorgan (22) oder der Anschlussflansch (21), vorzugsweise beide, zumindest teilweise aus einem nicht elastisch verformbaren Material, beispielsweise einem Polymer wie etwa Polypropylen oder Polyethylen bestehen.

6. Verschlussanordnung nach einem der Ansprüche 1 bis 5, wobei wenigstens eines, vorzugsweise beide Abstreifelemente (34.1, 34.2) aus einem elastisch verformbaren Material bestehen.

7. Verfahren zum Verschliessen eines Verschlusses (3) einer Verschlussanordnung nach einem der Ansprüche 1 bis 5, wobei das Verschlussorgan (22) in einer Bewegungsrichtung senkrecht zur Durchlassöffnung von einer die Durchlassöffnung offen lassenden Offenstellung in eine die Durchlassöffnung verschliessende Schliessstellung des Verschlussorgans (22) bewegt wird, wobei Verunreinigungen von dem am Verschlussorgan (22) angeordneten, als umlaufende Kante ausgebildeten, in Richtung einer inneren Oberfläche (21.4) des Anschlussflansches (21) weisenden, ersten Abstreifelement (34.1) von einer inneren Oberfläche des Anschlussflansches (21) abgestreift werden und möglichst eine gesamte Innenseite des Anschlussflansches von Verunreinigungen befreit wird.

8. Verfahren nach Anspruch 7, wobei das Verschlussorgan (22) nach dem Verschliessen des Anschlussflansches (21) wieder in Richtung der Offenstellung und dann zurück in die Schliessstellung bewegt wird, und so weitere Verunreinigungen von einer Oberfläche des Anschlussflansches (21) abgestreift werden, wobei dieser Vorgang insbesondere zwei oder mehr mal wiederholt wird.

9. Verfahren nach einem der Ansprüche 7 oder 8, wobei Verunreinigungen von einem an einer Innenseite des Anschlussflansches (21) angeordneten zweiten Abstreifelement (34.2) von einer äusseren Oberfläche des Verschlussorgans (22) abgestreift werden.

10. Schüttgutbehälter (2) mit einer Verschlussanordnung nach einem der Ansprüche 1 bis 6, wobei der Schüttgutbehälter (2) weiter eine Behälterwandung (20) umfasst, **dadurch gekennzeichnet, dass** die Behälterwandung (20) an dem Anschlussflansch (21) des Verschlusses (3) befestigt ist.

## Claims

1. Closure arrangement, comprising a closure (3) for a bulk material container (2), which comprises an annular connection flange (21) having a through-opening and a closure member (22) for selectively closing or opening the through-opening, wherein the closure member (22) comprises a conical portion and a cylindrical portion adjoining the latter, and wherein a container wall (20) of the bulk material container (2) is able to be fastened to the connection flange (21), **characterized in that** the closure member (22) comprises a first stripping element (34.1) that is arranged in an end region of the cylindrical portion of the closure member that is remote from the conical portion, is configured as a peripheral edge and is directed in the direction of an inner surface (21.4) of the connection flange (21), such that contaminants are able to be stripped from the inner surface of the connection flange (21) during a closing operation for closing the through-opening in the connection flange (21), and as far as possible an entire inner side of the connection flange is able to be freed of contaminants.

2. Closure arrangement according to Claim 1, wherein a peripheral, second stripping element (34.2) is arranged on the connection flange (21) in the region of the through-opening, contaminants being able to be stripped from a surface of the closure member (22) by said second stripping element (34.2) during a closing operation for closing the through-opening with the closure member (22), wherein the first and/or the second stripping element (34.1, 34.2) is/are configured in particular as a retaining or clamping device for retaining the closure member (22) in its closed position in the closure flange (21) .

3. Closure arrangement according to Claim 2, wherein the second stripping element (37.2) is arranged on the connection flange (21) such that, in a closed position of the closure member (22) in which the latter closes the through-opening, it is located opposite a region of the cylindrical portion (22.2) that is located closer to the conical portion (21.1) of the closure member (22) than the first stripping element (34.1).

4. Closure arrangement according to one of Claims 1 to 3, wherein, in order to provide sealing between the connection flange (21) and the closure member (22) in a closed position of the closure member (22) in which the latter closes the through-opening, the closure (3) comprises an annular closure seal (35, 36) made of elastically deformable material, said closure seal (35, 36) being arranged in particular in an inner region of the annular connection flange (21) .

5. Closure arrangement according to one of Claims 1 to 4, wherein at least the closure member (22) or the connection flange (21), preferably both, consist at least partially of a material that is not elastically deformable, for example a polymer such as polypropylene or polyethylene, for instance.

6. Closure arrangement according to one of Claims 1 to 5, wherein at least one, preferably both stripping elements (34.1, 34.2) consist of an elastically deformable material.

7. Method for closing a closure (3) for a closure arrangement according to one of Claims 1 to 5, wherein the closure member (22) is moved in a direction of movement perpendicular to the through-opening from an open position, leaving the through-opening open, into a closed position, closing the through-opening, of the closure member (22), wherein contaminants are stripped from an inner surface of the connection flange (21) by the first stripping element (34.1) arranged on the closure member (22), configured as a peripheral edge, and directed in the direction of an inner surface (21.4) of the connection flange (21), and as far as possible an entire inner side of the connection flange is freed of contaminants.

8. Method according to Claim 7, wherein, after the connection flange (21) has been closed, the closure member (22) is moved in the direction of the open position again and then back into the closed position, and so further contaminants are stripped from a surface of the connection flange (21), wherein this operation is repeated in particular two or more times.

9. Method according to either of Claims 7 and 8, wherein contaminants are stripped from an outer surface of the closure member (22) by a second stripping element (34.2) arranged on an inner side of the connection flange (21).

10. Bulk material container (2) having a closure arrangement according to one of Claims 1 to 6, wherein the bulk material container (2) also comprises a container wall (20), **characterized in that** the container wall (20) is fastened to the connection flange (21) of the closure (3).

## Revendications

1. Agencement de fermeture, comprenant une fermeture (3) pour un récipient de produit en vrac (2) qui comprend une bride de raccordement de forme annulaire (21) avec une ouverture de passage et un organe de fermeture (22) pour la fermeture ou l'ouverture sélectives de l'ouverture de passage, l'organe de fermeture (22) comprenant une portion de forme conique et une portion de forme cylindrique s'y raccordant et une paroi de récipient (20) du récipient de produit en vrac (2) pouvant être fixée à la bride de raccordement (21), **caractérisé en ce que** l'organe de fermeture (22) comprend un premier élément de raclage (34.1) disposé au niveau d'une région d'extrémité de la portion de forme cylindrique de l'organe de fermeture située à distance de la portion de forme conique, réalisé sous forme d'arête périphérique, orienté dans la direction d'une surface intérieure (21.4) de la bride de raccordement (21), de telle sorte que dans le cas d'une opération de fermeture pour fermer l'ouverture de passage de la bride de raccordement (21), des impuretés puissent être raclées de la surface intérieure de la bride de raccordement (21) et qu'un côté intérieur total de la bride de raccordement puisse dans la mesure du possible être débarrassé des impuretés.

2. Agencement de fermeture selon la revendication 1, dans lequel un deuxième élément de raclage périphérique (34.2) est disposé dans la région de l'ouverture de passage au niveau de la bride de raccordement (21), avec lequel, lors d'une opération de fermeture pour fermer l'ouverture de passage avec l'organe de fermeture (22), des impuretés peuvent être raclées d'une surface de l'organe de fermeture (22), le premier et/ou le deuxième élément de raclage (34.1, 34.2) étant notamment réalisés sous forme de dispositif de retenue ou de serrage pour retenir l'organe de fermeture (22) dans sa position de fermeture dans la bride de raccordement (21).

3. Agencement de fermeture selon la revendication 2, dans lequel le deuxième élément de raclage (37.2) est disposé au niveau de la bride de raccordement (21) de telle sorte que dans une position de fermeture de l'organe de fermeture (22) fermant l'ouverture de passage, il soit opposé à une région de la portion de forme cylindrique (22.2) qui est située plus près de la portion de forme conique (21.1) de l'organe de fermeture (22) que le premier élément de raclage (34.1).

4. Agencement de fermeture selon l'une quelconque des revendications 1 à 3, dans lequel la fermeture (3), pour réaliser l'étanchéité entre la bride de raccordement (21) et l'organe de fermeture (22) dans une position de fermeture de l'organe de fermeture (22) fermant l'ouverture de passage, comprend un joint d'étanchéité de fermeture de forme annulaire (35, 36) constitué d'un matériau déformable élastiquement, qui est disposé notamment dans une région intérieure de la bride de raccordement de forme annulaire (21).

5. Agencement de fermeture selon l'une quelconque des revendications 1 à 4, dans lequel au moins l'organe de fermeture (22) ou la bride de raccordement (21), de préférence les deux, se composent au moins en partie d'un matériau non déformable élastiquement, par exemple d'un polymère tel que du polypropylène ou du polyéthylène.

6. Agencement de fermeture selon l'une quelconque des revendications 1 à 5, dans lequel au moins un, de préférence les deux éléments de raclage (34.1, 34.2), se composent d'un matériau déformable élastiquement.

7. Procédé de fermeture d'une fermeture (3) d'un agencement de fermeture selon l'une quelconque des revendications 1 à 5, dans lequel l'organe de fermeture (22) est déplacé dans une direction de déplacement perpendiculaire à l'ouverture de passage depuis une position d'ouverture ouvrant l'ouverture de passage dans une position de fermeture de l'organe de fermeture (22) fermant l'ouverture de passage, des impuretés étant raclées d'une surface intérieure de la bride de raccordement (21) par le premier élément de raclage (34.1) disposé au niveau de l'organe de fermeture (22), réalisé sous forme d'arête périphérique, orienté dans la direction d'une surface intérieure (21.4) de la bride de raccordement (21), et un côté intérieur total de la bride de raccordement étant dans la mesure du possible débarrassé des impuretés.

8. Procédé selon la revendication 7, dans lequel l'organe de fermeture (22), après la fermeture de la bride de raccordement (21), est à nouveau déplacé dans la direction de la position d'ouverture puis à nouveau dans la position de fermeture, et de ce fait, des impuretés supplémentaires sont raclées d'une surface de la bride de raccordement (21), cette opération étant répétée notamment deux fois ou plus de deux fois.

9. Procédé selon l'une quelconque des revendications 7 ou 8, dans lequel des impuretés sont raclées d'une surface extérieure de l'organe de fermeture (22) par un deuxième élément de raclage (34.2) disposé au niveau d'un côté intérieur de la bride de raccordement (21).

10. Récipient de produit en vrac (2) comprenant un agencement de fermeture selon l'une quelconque des revendications 1 à 6, le récipient de produit en vrac (2) comprenant en outre une paroi de récipient (20), **caractérisé en ce que** la paroi de récipient (20) est fixée au niveau de la bride de raccordement (21) de la fermeture (3).
